# EUROPEAN PATENT APPLICATION

(11) **EP 4 796 605 A1**
(43) Date of publication of application: **26.08.2026**
(21) Application number: 24879736.7
(22) Date of filing: 16.10.2024
(51) Int. Cl.: C09D 143/04, C09D 5/00, C09D 5/16, C09D 7/63, C09D 7/65, C09D 201/00

(54) **ANTIFOULING COATING COMPOSITION AND ANTIFOULING COATING FILM**

(30) Priority: 18.10.2023 JP 2023179536
(71) Applicant: Nippon Paint Marine Coatings Co., Ltd., Osaka 531-8511 (JP)
(72) Inventor: YAMADA, Hisayuki, Osaka-shi, Osaka 531-8511 (JP); TSUJI, Tomohiro, Osaka-shi, Osaka 531-8511 (JP); TOMIYAMA, Soichiro, Osaka-shi, Osaka 531-8511 (JP)
(74) Representative: Vossius & Partner Patentanwälte Rechtsanwälte mbB
(86) International application number: PCT/JP2024/036809
(87) International publication number: WO 2025/084314

(57) **Abstract**

Provided is an antifouling coating composition comprising: a silicon atom-containing resin; and a thermoplastic resin other than the silicon atom-containing resin. The silicon atom-containing resin includes a constituent unit (A) having at least one kind of silicon atom-containing group selected from the group consisting of a group represented by a formula (I), a group represented by a formula (II), a group represented by a formula (III), and a group represented by a formula (IV). The thermoplastic resin includes a thermoplastic resin having a weight average molecular weight of greater than or equal to 1,000. A content of the thermoplastic resin having a weight average molecular weight of greater than or equal to 1,000 is greater than or equal to 6.0 parts by mass and less than or equal to 11.0 parts by mass with respect to 100 parts by mass of the silicon atom-containing resin.

## Description

### TECHNICAL FIELD

The present invention relates to an antifouling coating composition containing a silicon atom-containing resin. The present invention also relates to an antifouling coating film formed from the antifouling coating composition, a composite coating film including the antifouling coating film, and a ship and an in-water structure provided with the antifouling coating film or the composite coating film.

### BACKGROUND ART

In a ship, adhesion of organisms such as barnacles, mussels, and algae to parts in contact with sea water causes problems such as hindrance of efficient travel and waste of fuel. Conventionally, an antifouling coating composition is applied on the surface of a ship in order to prevent adhesion of organisms. For example, WO 2011/046086 (PTL 1) discloses an antifouling coating composition containing a silicon atom-containing resin as a vehicle as well as a thermoplastic resin and/or a plasticizer.

### CITATION LIST

### PATENT LITERATURE

PTL 1: WO 2011/046086

### SUMMARY OF INVENTION

### TECHNICAL PROBLEM

An antifouling coating film formed from an antifouling coating composition is required to exhibit excellent antifouling performance for a long period of time while immersed in water (sea water). Also, the antifouling coating film is required to have excellent crack resistance which means, for example, not to be easily cracked even in an environment where dry-wet cycles are repeated.

An object of the present invention is to provide an antifouling coating composition that makes it possible to form an antifouling coating film having excellent antifouling performance and excellent crack resistance. Another object of the present invention is to provide an antifouling coating film formed from the antifouling coating composition, a composite coating film including the antifouling coating film, and a ship and an in-water structure provided with the antifouling coating film or the composite coating film.

### SOLUTION TO PROBLEM

The present invention provides the following antifouling coating composition, antifouling coating film, composite coating film, ship, and in-water structure.
[1] An antifouling coating composition comprising:
   a silicon atom-containing resin; and
   a thermoplastic resin other than the silicon atom-containing resin,
   wherein
   the silicon atom-containing resin includes a constituent unit (A) having at least one kind of silicon atom-containing group selected from the group consisting of a group represented by a formula (I) below, a group represented by a formula (II) below, a group represented by a formula (III) below, and a group represented by a formula (IV) below,
   the thermoplastic resin includes a thermoplastic resin having a weight average molecular weight of greater than or equal to 1,000, and
   a content of the thermoplastic resin having a weight average molecular weight of greater than or equal to 1,000 is greater than or equal to 6.0 parts by mass and less than or equal to 11.0 parts by mass with respect to 100 parts by mass of the silicon atom-containing resin: 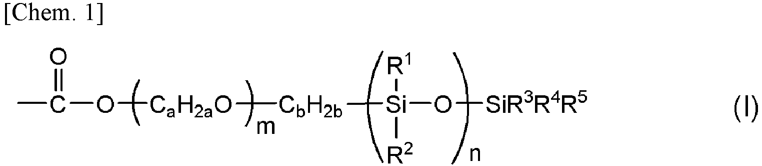 [in the formula (I), a and b each independently represent an integer of 2 to 5, m represents an integer of 0 to 50, and n represents an integer of 3 to 270; and R¹ to R⁵ each independently represent an alkyl group, an alkoxy group, a phenyl group, a substituted phenyl group, a phenoxy group, or a substituted phenoxy group]; 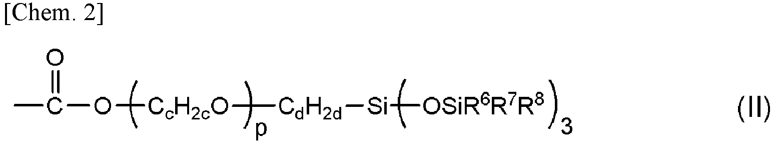 [in the formula (II), c and d each independently represent an integer of 2 to 5, and p represents an integer of 0 to 50; R⁶, R⁷ and R⁸ each independently represent an alkyl group, R^{a}, or R^{b};
   R^{a} is 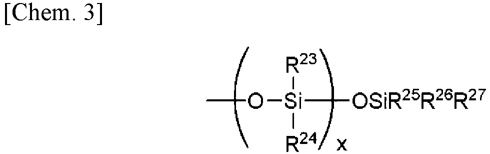 (in the formula, x represents an integer of 0 to 200, and R²³ to R²⁷ are the same or different and each represent an alkyl group); and
   R^{b} is 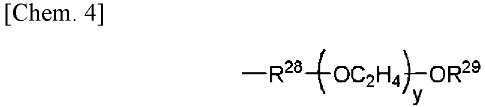 (in the formula, y represents an integer of 1 to 200, and R²⁸ and R²⁹ are the same or different and each represent an alkyl group)]; 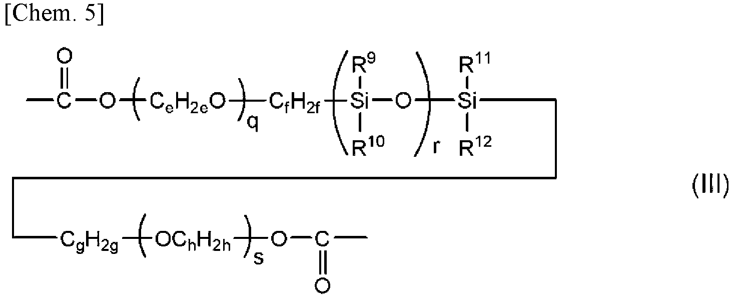 [in the formula (III), e, f, g, and h each independently represent an integer of 2 to 5, q and s each independently represent an integer of 0 to 50, and r represents an integer of 3 to 270; and R⁹ to R¹² each independently represent an alkyl group, an alkoxy group, a phenyl group, a substituted phenyl group, a phenoxy group, or a substituted phenoxy group]; 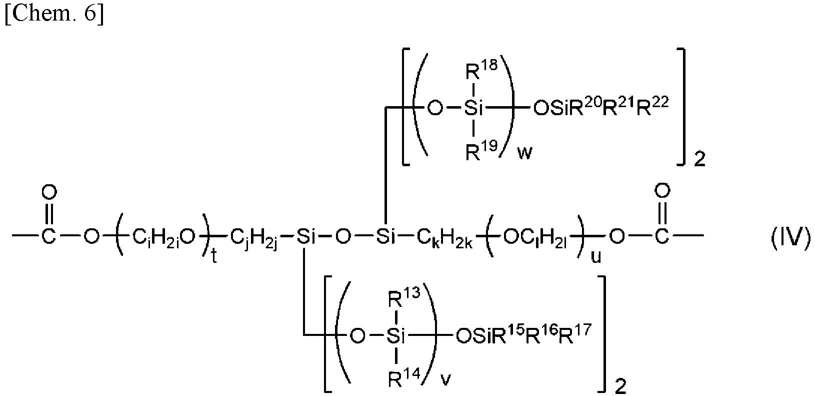 [in the formula (IV), i, j, k, and l each independently represent an integer of 2 to 5, t and u each independently represent an integer of 0 to 50, and v and w each independently represent an integer of 0 to 70; and R¹³ to R²² are the same or different and each represent an alkyl group].
[2] The antifouling coating composition according to [1], wherein the silicon atom-containing resin further includes a constituent unit (B) having a triorganosilyloxycarbonyl group.
[3] The antifouling coating composition according to [1] or [2], wherein the silicon atom-containing resin further includes a constituent unit (C) derived from a monomer (c) which is a monofunctional (meth)acrylic acid ester represented by a formula (c) below:

   CH₂=C(R^{A})(COOR^{B}) (c)

   [in the formula (c), R^{A} represents a hydrogen atom or a methyl group; and R^{B} represents a monovalent group including one or more kinds selected from the group consisting of a hydroxyl group, a carboxy group, and an oxyalkylene chain].
[4] The antifouling coating composition according to any one of [1] to [3], wherein the silicon atom-containing resin further includes a constituent unit (D) having at least one kind of metal atom-containing group selected from the group consisting of a group represented by a formula (V) below and a group represented by a formula (VI) below: 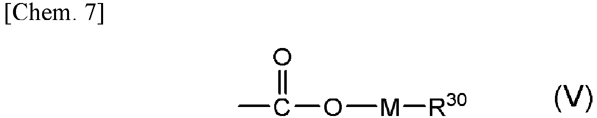 [in the formula (V), M represents a divalent metal atom, and R³⁰ represents an organic acid residue or an alcohol residue]; and 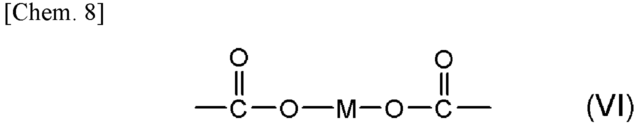 [in the formula (VI), M represents a divalent metal atom].
[5] The antifouling coating composition according to any one of [1] to [4], wherein a content of the constituent unit (A) is greater than or equal to 20 mass% in all constituent units contained in the silicon atom-containing resin.
[6] The antifouling coating composition according to any one of [1] to [5], not comprising an antifouling agent.
[7] The antifouling coating composition according to any one of [1] to [5], further comprising an antifouling agent.
[8] The antifouling coating composition according to [7], wherein the antifouling agent is at least one kind selected from the group consisting of cuprous oxide, pyrithione metal salt, 4,5-dichloro-2-n-octyl-4-isothiazolin-3-one, 2-methylthio-4-t-butylamino-6-cyclopropylamino-s-triazine, 4-bromo-2-(4-chlorophenyl)-5-(trifluoromethyl)-1H-pyrrole-3-carbonitrile, and medetomidine.
[9] An antifouling coating film formed from the antifouling coating composition according to any one of [1] to [8].
[10] A composite coating film comprising a primer coating film formed from an antirust coating composition, and an antifouling coating film formed from the antifouling coating composition according to any one of [1] to [8] and overlaid on the primer coating film.
[11] A ship comprising the antifouling coating film according to [9] or the composite coating film according to claim [10].
[12] An in-water structure comprising the antifouling coating film according to [9] or the composite coating film according to [10].

### ADVANTAGEOUS EFFECTS OF INVENTION

It is possible to provide an antifouling coating composition that makes it possible to form an antifouling coating film having excellent antifouling performance and excellent crack resistance. It is also possible to provide an antifouling coating film formed from the antifouling coating composition, a composite coating film including the antifouling coating film, and a ship and an in-water structure provided with the antifouling coating film or the composite coating film.

### BRIEF DESCRIPTION OF DRAWINGS

Fig. 1 is a schematic top view illustrating a method for evaluating the antifouling property of a coating film.
Fig. 2 is a schematic cross-sectional view illustrating a method for evaluating the antifouling property of a coating film.

### DESCRIPTION OF EMBODIMENTS

### <Antifouling Coating Composition>

An antifouling coating composition according to the present invention (hereinafter, also simply referred to as a "coating composition") contains a specific silicon atom-containing resin described later and a thermoplastic resin other than the silicon atom-containing resin. The thermoplastic resin includes a thermoplastic resin having a weight average molecular weight of greater than or equal to 1,000, and the content of the thermoplastic resin having a weight average molecular weight of greater than or equal to 1,000 is greater than or equal to 6.0 parts by mass and less than or equal to 11.0 parts by mass with respect to 100 parts by mass of the silicon atom-containing resin.

The coating composition according to the present invention makes it possible to form an antifouling coating film (hereinafter, also simply referred to as a "coating film") capable of exhibiting excellent antifouling performance for a long period of time while immersed in water (sea water). When the coating film according to the present invention is formed on the surface of an underwater moving body such as a ship, the coating film can exhibit excellent antifouling performance even while the underwater moving body is moving in sea water. In a case where the underwater moving body is moving in sea water for a long period of time, antifouling performance of a conventional antifouling coating film tends to decrease in a later phase of the period, but antifouling performance of the coating film according to the present invention can remain excellent also in the later phase.

In addition, the coating composition according to the present invention also makes it possible to form a coating film capable of exhibiting excellent crack resistance for a long period of time while immersed in water (sea water). In a case where the underwater moving body is immersed in sea water for a long period of time, crack resistance of a conventional antifouling coating film tends to decrease in a later phase of the period. A decrease of crack resistance facilitates a decrease of antifouling performance. The coating film according to the present invention can maintain excellent crack resistance also in the later phase. Furthermore, even after immersed in sea water for a certain period of time followed by repeated cycles of immersion in sea water and non-immersion in sea water, the coating film according to the present invention can maintain excellent crack resistance.

The coating composition according to the present invention can be suitably used as an antifouling coating composition to be applied to an underwater moving body such as a ship or to an in-water structure, and it is particularly suitable as an antifouling coating composition to be applied to an underwater moving body such as a ship.

Hereinafter, components that are contained or may be contained in the coating composition will be described in detail.

### (1) Silicon atom-containing resin

The silicon atom-containing resin contained in the coating composition includes a constituent unit (A). The constituent unit (A) is a constituent unit having at least one kind of silicon atom-containing group selected from the group consisting of a group represented by the formula (I), a group represented by the formula (II), a group represented by the formula (III), and a group represented by the formula (IV). The constituent unit (A) may be a constituent unit derived from a monomer (a) having at least one kind of silicon atom-containing group selected from the above-listed groups.

The silicon atom-containing resin may include a constituent unit other than the constituent unit (A). Examples of the constituent unit include:
a constituent unit (B) having a triorganosilyloxycarbonyl group;
a constituent unit (C) derived from a monomer (c) which is a monofunctional (meth)acrylic acid ester represented by the formula (c);
a constituent unit (D) having at least one kind of metal atom-containing group selected from the group consisting of a group represented by the formula (V) and a group represented by the formula (VI);
and the like.

In the present description, "(meth)acryloyl" refers to at least one of methacryloyl and acryloyl; "(meth)acrylic" refers to at least one of methacrylic and acrylic; and "(meth)acrylate" refers to at least one of methacrylate and acrylate.

### (1-1) Silicon atom-containing group

The silicon atom-containing group is at least one kind selected from the group consisting of a group represented by the formula (I), a group represented by the formula (II), a group represented by the formula (III), and a group represented by the formula (IV).

In the formula (I), a and b each independently represent an integer of 2 to 5, m represents an integer of 0 to 50, and n represents an integer of 3 to 270. R¹ to R⁵ each independently represent an alkyl group, an alkoxy group, a phenyl group, a substituted phenyl group, a phenoxy group, or a substituted phenoxy group.

In the formula (II), c and d each independently represent an integer of 2 to 5, and p represents an integer of 0 to 50. R⁶, R⁷, and R⁸ each independently represent an alkyl group, R^{a}, or R^{b};

In R^{a}, x represents an integer of 0 to 200. R²³ to R²⁷ are the same or different and each represent an alkyl group.

In R^{b}, y represents an integer of 1 to 200. R²⁸ to R²⁹ are the same or different and each represent an alkyl group.

In the formula (III), e, f, g, and h each independently represent an integer of 2 to 5, q and s each independently represent an integer of 0 to 50, and r represents an integer of 3 to 270. R⁹ to R¹² each independently represent an alkyl group, an alkoxy group, a phenyl group, a substituted phenyl group, a phenoxy group, or a substituted phenoxy group.

In the formula (IV), i, j, k, and l each independently represent an integer of 2 to 5, t and u each independently represent an integer of 0 to 50, and v and w each independently represent an integer of 0 to 70. R¹³ to R²² are the same or different and each represent an alkyl group.

The silicon atom-containing resin may include two or more kinds of silicon atom-containing groups selected from the group consisting of a group represented by the formula (I), a group represented by the formula (II), a group represented by the formula (III), and a group represented by the formula (IV). In this case, the silicon atom-containing resin may include two or more kinds of groups represented by the formula (I), two or more kinds of groups represented by the formula (II), two or more kinds of groups represented by the formula (III), and/or two or more kinds of groups represented by the formula (IV).

### (1-2) Monomer (a)

The constituent unit (A) may be a constituent unit derived from a monomer (a) having at least one kind of silicon atom-containing group selected a group represented by the formula (I), a group represented by the formula (II), a group represented by the formula (III), and a group represented by the formula (IV).

The monomer (a) is preferably at least one kind selected from the group consisting of a monomer (a1) represented by the formula (I'), a monomer (a2) represented by the formula (II'), a monomer (a3) represented by the formula (III'), and a monomer (a4) represented by the formula (IV'). The monomer (a1) represented by the formula (I'), the monomer (a2) represented by the formula (II'), the monomer (a3) represented by the formula (III'), and the monomer (a4) represented by the formula (IV') are silicon atom-containing polymerizable monomers respectively including a group represented by the formula (I), a group represented by the formula (II), a group represented by the formula (III), and a group represented by the formula (IV). 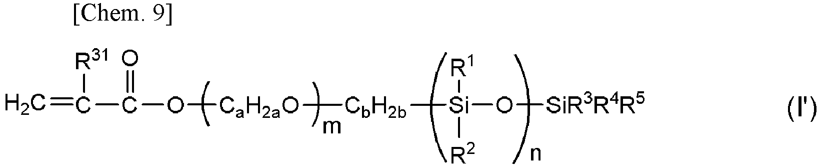 [In the formula (I'), R³¹ represents a hydrogen atom or a methyl group, and a, b, m, n and R¹ to R⁵ represent the same meaning as previously mentioned.] 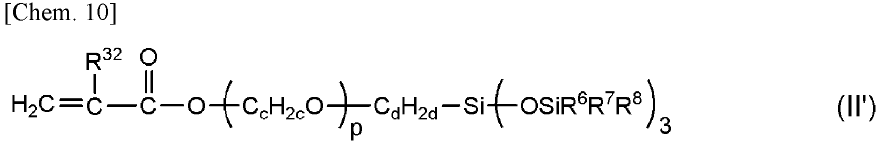 [In the formula (II'), R³² represents a hydrogen atom or a methyl group, and c, d, p, and R⁶ to R⁸ represent the same meaning as previously mentioned.] 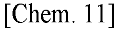 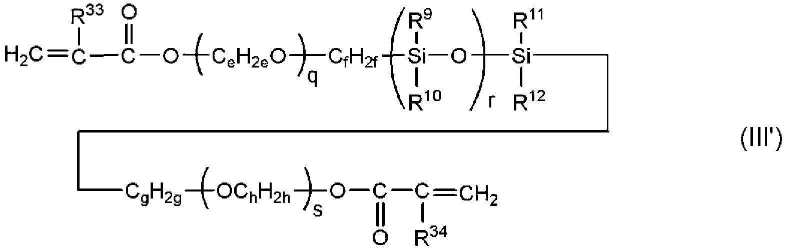 [In the formula (III'), R³³ and R³⁴ each independently represent a hydrogen atom or a methyl group, and e, f, g, h, q, r, s and R⁹ to R¹² represent the same meaning as previously mentioned.] 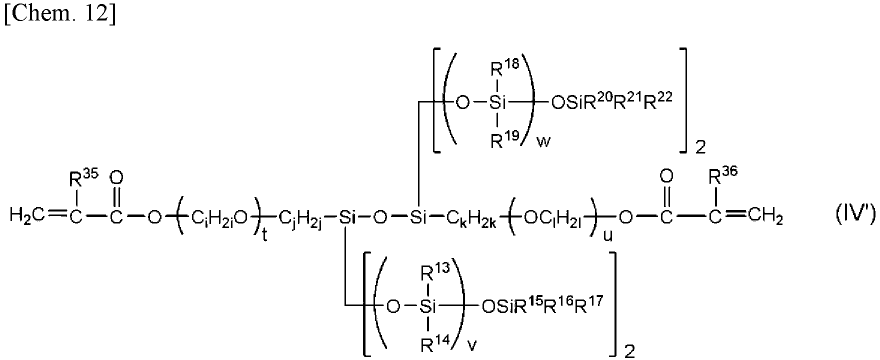 [In the formula (IV'), R³⁵ and R³⁶ each independently represent a hydrogen atom or a methyl group, and i, j, k, l, t, u, v, w and R¹³ to R²² represent the same meaning as previously mentioned.]

By polymerization of the monomer composition containing the monomer (a), a silicon atom-containing resin that is a (meth)acrylic resin including a constituent unit (A) derived from the monomer (a) selected from the group consisting of the monomer (a1), the monomer (a2), the monomer (a3) and the monomer (a4) can be obtained.
This silicon atom-containing resin includes at least one kind of silicon atom-containing group selected from the group consisting of a group represented by the formula (I), a group represented by the formula (II), a group represented by the formula (III), and a group represented by the formula (IV).

The silicon atom-containing resin may include two or more kinds of constituent units (A) derived from the monomer (a).

The monomer (a) may be a combination of two or more kinds of monomers belonging to the monomer (a). The two or more kinds of monomers may have molecular weights different from each other.

The monomer (a1) is represented by the formula (I'). By using the monomer (a1) as the monomer (a), a silicon atom-containing resin that is a (meth)acrylic resin having a silicon atom-containing group represented by the formula (I) in the side chain is obtained.

The silicon atom-containing resin may include two or more kinds of constituent units derived from the monomer (a1)..

In the formula (I') [the same applies to the formula (I)], a is preferably 2 or 3.
b is preferably 2 or 3.
m is preferably greater than or equal to 0 and less than or equal to 25, and more preferably greater than or equal to 0 and less than or equal to 20, from the viewpoint of water resistance, the adhesion to the substrate, and the like of the coating film. m may be greater than or equal to 3 or greater than or equal to 5, and less than or equal to 10 or less than or equal to 8.
n is usually greater than or equal to 3 and less than or equal to 270, preferably greater than or equal to 35 and less than or equal to 245, more preferably greater than or equal to 45 and less than or equal to 205, and still more preferably greater than or equal to 45 and less than or equal to 160, from the viewpoint of antifouling performance of the coating film and solubility in common organic solvents.

Examples of a substituent of the substituted phenyl group and substituted phenoxy group in R¹ to R⁵ include an alkyl group and a halogen atom.

R¹ to R⁵ are each preferably an alkyl group, more preferably an alkyl group having 1 to 6 carbon atoms, still more preferably an alkyl group having 1 to 4 carbon atoms such as a methyl group, an ethyl group, a n-propyl group, an iso-propyl group, a n-butyl group, an iso-butyl group, a sec-butyl group, or a tert-butyl group, and particularly preferably a methyl group or an ethyl group.

As the monomer (a1), commercially available products may be used. Examples of commercially available products include:
"FM-0711" (one-terminal methacryloyloxyalkyl-modified organopolysiloxane, molecular weight: 1,000), "FM-0721" (one-terminal methacryloyloxyalkyl-modified organopolysiloxane, molecular weight: 5,000), and "FM-0725" (one-terminal methacryloyloxyalkyl-modified organopolysiloxane, molecular weight: 10,000) manufactured by JNC; and
"X-22-2404" (one-terminal methacryloyloxyalkyl-modified organopolysiloxane, molecular weight: 420), "X-22-174ASX" (one-terminal methacryloyloxyalkyl-modified organopolysiloxane, molecular weight: 900), "X-22-174BX" (one-terminal methacryloyloxyalkyl-modified organopolysiloxane, molecular weight: 2,300), "KF-2012" (one-terminal methacryloyloxyalkyl-modified organopolysiloxane, molecular weight: 4,600), and "X-22-2426" (one-terminal methacryloyloxyalkyl-modified organopolysiloxane, molecular weight: 12,000) manufactured by Shin-Etsu Chemical.

The monomer (a2) is represented by the formula (II'). By using the monomer (a2) as the monomer (a), a silicon atom-containing resin that is a (meth)acrylic resin having a silicon atom-containing group represented by the formula (II) in the side chain is obtained.

The silicon atom-containing resin may include two or more kinds of constituent units derived from the monomer (a2).

In the formula (II') [the same applies to the formula (II)], c is preferably 2 or 3.
d is preferably 2 or 3.
p is preferably greater than or equal to 0 and less than or equal to 25, and more preferably greater than or equal to 0 and less than or equal to 20, from the viewpoint of water resistance, the adhesion to the substrate, and the like of the coating film. p may be greater than or equal to 3 or greater than or equal to 5, and less than or equal to 10 or less than or equal to 8.
x is usually greater than or equal to 0 and less than or equal to 200, preferably greater than or equal to 10 and less than or equal to 150, and more preferably greater than or equal to 20 and less than or equal to 125, from the viewpoint of solubility in common organic solvents.
y is usually greater than or equal to 1 and less than or equal to 200, preferably greater than or equal to 10 and less than or equal to 150, and more preferably greater than or equal to 20 and less than or equal to 125, from the viewpoint of solubility in common organic solvents.

Alkyl groups in R⁶ to R⁸ and R²³ to R²⁹ are each preferably an alkyl group having 1 to 6 carbon atoms, more preferably an alkyl group having 1 to 4 carbon atoms such as a methyl group, an ethyl group, a n-propyl group, an iso-propyl group, a n-butyl group, an iso-butyl group, a sec-butyl group, or a tert-butyl group, and still more preferably a methyl group or an ethyl group.

It is preferable that all of R⁶ to R⁸ are alkyl groups.

As the monomer (a2), commercially available products may be used. Examples of commercially available products include "TM-0701T" (one-terminal methacryloyloxyalkyl-modified organopolysiloxane, molecular weight: 423) manufactured by JNC.

The monomer (a3) is represented by the formula (III'). By using the monomer (a3) as the monomer (a), a silicon atom-containing resin that is a (meth)acrylic resin including a silicon atom-containing group represented by the formula (III) (this silicon atom-containing group is a cross-linking group crosslinking polymer main chains) is obtained.

The silicon atom-containing resin may include two or more kinds of constituent units derived from the monomer (a3).

In the formula (III') [the same applies to the formula (III)], e and h are each preferably 2 or 3.
f and g are each preferably 2 or 3.
q and s are each preferably greater than or equal to 0 and less than or equal to 30, more preferably greater than or equal to 0 and less than or equal to 25, and still more preferably greater than or equal to 0 and less than or equal to 20, from the viewpoint of the water resistance, the adhesion to the substrate, and the like of the coating film. q and s may be each greater than or equal to 3 or greater than or equal to 5, and less than or equal to 10 or less than or equal to 8.
r is usually greater than or equal to 3 and less than or equal to 270, preferably greater than or equal to 35 and less than or equal to 245, more preferably greater than or equal to 45 and less than or equal to 205, and still more preferably greater than or equal to 45 and less than or equal to 160, from the viewpoint of antifouling performance of the coating film, solubility in common organic solvents, and the like.

Examples of a substituent of the substituted phenyl group and substituted phenoxy group in R⁹ to R¹² include an alkyl group and a halogen atom.

R⁹ to R¹² are each preferably an alkyl group, more preferably an alkyl group having 1 to 6 carbon atoms, still more preferably an alkyl group having 1 to 4 carbon atoms such as a methyl group, an ethyl group, a n-propyl group, an iso-propyl group, a n-butyl group, an iso-butyl group, a sec-butyl group, or a tert-butyl group, and particularly preferably a methyl group or an ethyl group.

As the monomer (a3), commercially available products may be used. Examples of commercially available products include:
"FM-7711" (both-terminal methacryloyloxyalkyl-modified organopolysiloxane, molecular weight: 1,000), "FM-7721" (both-terminal methacryloyloxyalkyl-modified organopolysiloxane, molecular weight: 5,000), and "FM-7725" (both-terminal methacryloyloxyalkyl-modified organopolysiloxane, molecular weight: 10,000) manufactured by JNC; and
"X-22-164" (both-terminal methacryloyloxyalkyl-modified organopolysiloxane, molecular weight: 380), "X-22-164AS" (both-terminal methacryloyloxyalkyl-modified organopolysiloxane, molecular weight: 900), "X-22-164A" (both-terminal methacryloyloxyalkyl-modified organopolysiloxane, molecular weight: 1,720), "X-22-164B" (both-terminal methacryloyloxyalkyl-modified organopolysiloxane, molecular weight: 3,200), "X-22-2445" (both-terminal acryloyloxyalkyl-modified organopolysiloxane, molecular weight: 3,200), "X-22-164C" (both-terminal methacryloyloxyalkyl-modified organopolysiloxane, molecular weight: 4,800), and "X-22-164E" (both-terminal methacryloyloxyalkyl-modified organopolysiloxane, molecular weight: 7,800) manufactured by Shin-Etsu Chemical.

The monomer (a4) is represented by the formula (IV'). By using the monomer (a4) as the monomer (a), a silicon atom-containing resin that is a (meth)acrylic resin including a silicon atom-containing group represented by the formula (IV) (this silicon atom-containing group is a cross-linking group crosslinking polymer main chains.) is obtained. As the monomer (a4), commercially available products may be used.

The silicon atom-containing resin may include two or more kinds of constituent units derived from the monomer (a4).

In the formula (IV') [the same applies to the formula (IV)], i and l are each preferably 2 or 3.
j and k are each preferably 2 or 3.
t and u are each preferably greater than or equal to 0 and less than or equal to 30, more preferably greater than or equal to 0 and less than or equal to 25, and still more preferably greater than or equal to 0 and less than or equal to 20, from the viewpoint of the water resistance, the adhesion to the substrate, and the like of the coating film. q and s may be each greater than or equal to 3 or greater than or equal to 5, and less than or equal to 10 or less than or equal to 8.
v and w are each usually greater than or equal to 0 and less than or equal to 70, preferably greater than or equal to 5 and less than or equal to 60, and more preferably greater than or equal to 10 and less than or equal to 50, from the viewpoint of antifouling performance of the coating film, solubility in common organic solvents, and the like.

Alkyl groups in R¹³ to R²² are each preferably an alkyl group having 1 to 6 carbon atoms, more preferably an alkyl group having 1 to 4 carbon atoms such as a methyl group, an ethyl group, a n-propyl group, an iso-propyl group, a n-butyl group, an iso-butyl group, a sec-butyl group, or a tert-butyl group, and still more preferably a methyl group or an ethyl group.

The molecular weight of the monomer (a) is preferably greater than or equal to 400, more preferably greater than or equal to 500, still more preferably greater than or equal to 1,000, yet still more preferably greater than or equal to 2,000, particularly preferably greater than or equal to 2,500, yet particularly preferably greater than or equal to 3,000, and most preferably greater than or equal to 4,000 or greater than or equal to 5,000, and may be greater than or equal to 10,000, from the viewpoint of enhancing the antifouling performance of the coating film to be obtained. The molecular weight of the monomer (a) is usually less than or equal to 20,000, preferably less than or equal to 18,000, more preferably less than or equal to 15,000, and still more preferably less than or equal to 12,000. If the molecular weight of the monomer (a) is too high, the coating film formed from the coating composition is apt to be nonuniform in distribution of components due to the immiscibility between monomers in the monomer composition which is a mixture of monomers used for preparing the silicon atom-containing resin or the immiscibility between polymers generated by polymerization of the monomer composition.

The molecular weight of the monomer (a) may be a number average molecular weight. The number average molecular weight of the monomer (a) is a number average molecular weight in terms of polystyrene measured by gel permeation chromatography (GPC).

From the viewpoint of enhancing the antifouling performance of the coating film, the content of the constituent unit (A) derived from the monomer (a) is preferably greater than or equal to 20 mass%, more preferably greater than or equal to 21 mass%, still more preferably greater than or equal to 25 mass%, and may be greater than or equal to 30 mass%, or greater than or equal to 35 mass%, or greater than or equal to 40 mass%, or greater than or equal to 50 mass% in all constituent units contained in the silicon atom-containing resin. When the content of the constituent unit (A) is greater than or equal to 20 mass%, the coating composition can exhibit sufficient antifouling performance even when an antifouling agent is not additionally contained. From the viewpoint of coating film physical properties and uniformity of the coating film described above, the content of the constituent unit (A) is preferably less than or equal to 90 mass%, more preferably less than or equal to 80 mass%, still more preferably less than or equal to 70 mass%, and particularly preferably less than or equal to 60 mass% in all constituent units contained in the silicon atom-containing resin.

### (1-3) Monomer (b)

The silicon atom-containing resin can further have a constituent unit (B) having a triorganosilyloxycarbonyl group. The constituent unit (B) may be a constituent unit derived from a monomer (b) having a triorganosilyloxycarbonyl group. When the silicon atom-containing resin further has the constituent unit (B), antifouling performance of the coating film can be further enhanced.

Examples of the triorganosilyloxycarbonyl group include a group represented by a formula (VII). 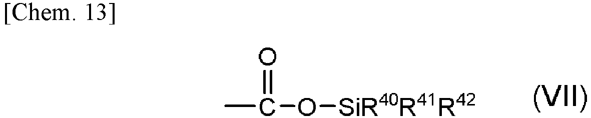 [In the formula (VII), R⁴⁰, R⁴¹, and R⁴² are the same or different and each represent a hydrocarbon residue having 1 to 20 carbon atoms.]

The monomer (b) is preferably a monomer (b1) represented by a formula (VII'). 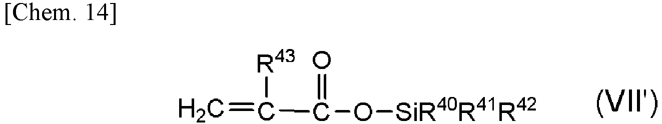 [In the formula (VII'), R⁴³ represents a hydrogen atom or a methyl group, and R⁴⁰, R⁴¹, and R⁴² are the same or different and each represent a hydrocarbon group having 1 to 20 carbon atoms.]

By polymerization of the monomer composition containing the monomer (b1), a silicon atom-containing resin that is a (meth)acrylic resin including the constituent unit (B) derived from the monomer (b1) is obtained. The silicon atom-containing resin includes -C(=O)-O-SiR⁴⁰R⁴¹R⁴² as a triorganosilyloxycarbonyl group.

The silicon atom-containing resin may include two or more kinds of constituent units (B). For example, the silicon atom-containing resin may include two or more kinds of constituent units (B) including different triorganosilyloxycarbonyl groups.

In the formula (VII') [the same applies to the formula (VII)], R⁴⁰, R⁴¹ and R⁴² are the same or different and each represent a hydrocarbon residue having 1 to 20 carbon atoms (monovalent hydrocarbon group). Examples of the hydrocarbon residue having 1 to 20 carbon atoms include a linear or branched alkyl group having 20 or less carbon atoms such as a methyl group, an ethyl group, a n-propyl group, an iso-propyl group, a n-butyl group, an iso-butyl group, a sec-butyl group, a tert-butyl group, a pentyl group, a hexyl group, a heptyl group, an octyl group, a nonyl group, a decyl group, an undecyl group, a dodecyl group, a tridecyl group, or a tetradecyl group; a cyclic alkyl group that may have a substituent such as a cyclohexyl group or a substituted cyclohexyl group; and an aryl group that may have a substituent such as an aryl group or a substituted aryl group.

Examples of the cyclic alkyl group that has a substituent include a cyclic alkyl group substituted with a halogen, an alkyl group having up to about 18 carbon atoms, an acyl group, a nitro group, or an amino group. Examples of the aryl group that has a substituent include an aryl group substituted with a halogen, an alkyl group having up to about 18 carbon atoms, an acyl group, a nitro group, or an amino group.

Among these, it is preferable that one or more of R⁴⁰, R⁴¹ and R⁴² is an isopropyl group, and it is more preferable that all of R⁴⁰, R⁴¹ and R⁴² are iso-propyl groups since antifouling performance of the coating film tends to be able to be stably maintained for a long period of time.

When the silicon atom-containing resin includes the constituent unit (B), the content of the constituent unit (B) is preferably greater than or equal to 2 mass% and less than or equal to 50 mass%, more preferably greater than or equal to 3 mass% and less than or equal to 40 mass%, still more preferably greater than or equal to 5 mass% and less than or equal to 35 mass%, and yet still more preferably greater than or equal to 5 mass% and less than or equal to 25 mass% in all constituent units contained in the silicon atom-containing resin, from the viewpoint of antifouling performance of the coating film.

When the silicon atom-containing resin includes the constituent unit (B), the ratio of the content of the constituent unit (B) to the content of the constituent unit (A) is preferably greater than or equal to 2 parts by mass and less than or equal to 100 parts by mass, more preferably greater than or equal to 5 parts by mass and less than or equal to 90 parts by mass, and still more preferably greater than or equal to 10 parts by mass and less than or equal to 80 parts by mass, and may be less than or equal to 70 parts by mass, less than or equal to 60 parts by mass, less than or equal to 50 parts by mass, or less than or equal to 40 parts by mass, with respect to 100 parts by mass of the content of the constituent unit (A).

### (1-4) Monomer (c)

The silicon atom-containing resin can further have a constituent unit (C) derived from a monomer (c). The monomer (c) is a monofunctional (meth)acrylic acid ester represented by a formula (c). When the silicon atom-containing resin further has the constituent unit (C), antifouling performance of the coating film can be further enhanced. Furthermore, when the constituent unit (C) is further contained, a coating film degradation rate can be moderately increased.

CH₂=C(R^{A})(COOR^{B}) (c)

In the formula (c), R^{A} represents a hydrogen atom or a methyl group. R^{B} represents a monovalent group including one or more kinds selected from the group consisting of a hydroxyl group, a carboxy group, and an oxyalkylene chain. The silicon atom-containing resin may include two or more kinds of constituent units derived from the monomer (c). The monomer (c) may be a monomer including two or more kinds of groups selected from the group consisting of a hydroxyl group, a carboxy group, and an oxyalkylene chain.

From the viewpoint of enhancing the antifouling performance of the coating film, R^{B} of the monomer (c) preferably contains at least an oxyalkylene chain. An alkylene group included in the oxyalkylene chain may be linear or branched, and the number of carbon atoms of the alkylene group is, for example, greater than or equal to 1 and less than or equal to 24, preferably greater than or equal to 1 and less than or equal to 13, and more preferably greater than or equal to 1 and less than or equal to 6, and still more preferably 2 or 3. Examples of the alkylene group include -CH₂-, - (CH₂)₂-, -(CH₂)₃-, -CH(CH₃)CH₂-, and -CH₂CH(CH₃)-.

Examples of the monomer (c) include hydroxyl group-containing (meth)acrylic acid alkyl esters including an ester moiety of 1 or more and 20 or less carbon atoms, such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, and 4-hydroxybutyl (meth)acrylate; carboxy group-containing (meth)acrylic acid alkyl esters including an ester moiety of 1 or more and 20 or less carbon atoms; alkoxyalkyl (meth)acrylates including an ester moiety of 1 or more and 20 or less carbon atoms, such as methoxyethyl (meth)acrylate; (meth)acrylic acid esters including an ester moiety containing a polyalkylene glycol chain, such as methoxy polyethylene glycol (meth)acrylate [the number of repetitions of -OC₂H₄- is, for example, 1 to 50, preferably 1 to 24, more preferably 2 to 14, still more preferably 2 to 9] and methoxy polypropylene glycol (meth)acrylate [the number of repetitions of - OC₃H₆- is, for example, 1 to 50, preferably 1 to 24, more preferably 2 to 14, still more preferably 2 to 9]; and (meth)acrylic acid esters including an ester moiety containing a polyalkylene glycol chain and a carboxy group, such as (meth)acryloyloxyethylsuccinic acid, (meth)acryloyloxyethylphthalic acid, (meth)acryloyloxyethylhexahydrophthalic acid, (meth)acryloyloxypropylphthalic acid, and (meth)acryloyloxypropylhexahydrophthalic acid.

Among the above, the monomer (c) is preferably a (meth)acrylic acid alkoxyalkyl including an ester moiety having 1 or more and 20 or less carbon atoms, a (meth)acrylic acid ester including an ester moiety containing a polyalkylene glycol chain, and/or a (meth)acrylic acid ester including an ester moiety containing a polyalkylene glycol chain and a carboxy group.

When the silicon atom-containing resin includes the constituent unit (C), the content of the constituent unit (C) is preferably greater than or equal to 0.1 mass% and less than or equal to 40 mass%, more preferably greater than or equal to 0.5 mass% and less than or equal to 35 mass%, and still more preferably greater than or equal to 1 mass% and less than or equal to 30 mass%, and may be less than or equal to 25 mass%, less than or equal to 20 mass%, less than or equal to 15 mass%, or less than or equal to 10 mass% in all constituent units contained in the silicon atom-containing resin, from the viewpoint of antifouling performance of the coating film.

When the silicon atom-containing resin includes the constituent unit (C), the ratio of the content of the constituent unit (C) to the content of the constituent unit (A) is preferably greater than or equal to 0.5 parts by mass and less than or equal to 80 parts by mass, more preferably greater than or equal to 1 part by mass and less than or equal to 70 parts by mass, still more preferably greater than or equal to 1 part by mass and less than or equal to 60 parts by mass, and yet still more preferably greater than or equal to 2 parts by mass and less than or equal to 50 parts by mass, and may be less than or equal to 45 parts by mass, less than or equal to 40 parts by mass, less than or equal to 30 parts by mass, or less than or equal to 20 parts by mass, with respect to 100 parts by mass of the content of the constituent unit (A).

### (1-5) Monomer (d)

The silicon atom-containing resin may further include a constituent unit (D) having at least one kind of metal atom-containing group selected from the group consisting of a group represented by the formula (V) and a group represented by the formula (VI). The constituent unit (D) may be a constituent unit derived from a monomer (d) having at least one kind of metal atom-containing group selected from the above-listed groups. When the silicon atom-containing resin further has the constituent unit (D), antifouling performance of the coating film can be further enhanced.

The silicon atom-containing resin may have both a group represented by the formula (V) and a group represented by the formula (VI).

The monomer (d) is preferably at least one kind selected from the group consisting of a monomer (d1) represented by the formula (V') and a monomer (d2) represented by the formula (VI'). 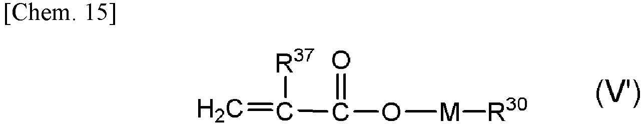 [In the formula (V'), R³⁷ represents a hydrogen atom or a methyl group, and M and R³⁰ represent the same meaning as previously mentioned.] 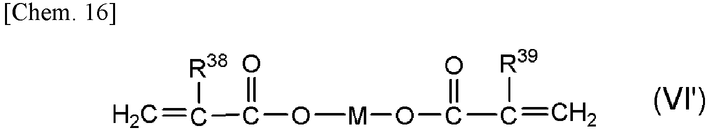 [In the formula (VI'), R³⁸ and R³⁹ each independently represent a hydrogen atom or a methyl group, and M represents the same meaning as previously mentioned.]

By polymerization of the monomer composition containing the monomer (d), a silicon atom-containing resin that is a (meth)acrylic resin including the constituent unit (D) derived from the monomer (d) selected from the group consisting of the monomer (d1) and the monomer (d2) is obtained. This silicon atom-containing resin includes at least one kind of metal atom-containing group selected from the group consisting of a group represented by the formula (V) and a group represented by the formula (VI).

The silicon atom-containing resin may include two or more kinds of constituent units (D).

The divalent metal atom M in the formula (V') [the same applies to formula (V)] and the formula (VI') [the same applies to formula (VI)] is, for example, Mg, Zn, or Cu, and is preferably Zn or Cu.

In the formula (V') [the same applies to formula (V)], R³⁰ is preferably an organic acid residue.

The monomer (d1) is represented by the formula (V'). By using the monomer (d1) as the monomer (d), a silicon atom-containing resin that is a (meth)acrylic resin further including a metal atom-containing group represented by the formula (V) is obtained.

In R³⁰, as an organic acid forming an organic acid residue, for example, monobasic organic acids such as acetic acid, monochloroacetic acid, monofluoroacetic acid, propionic acid, caproic acid, caprylic acid, 2-ethylhexyl acid, capric acid, versatic acid, isostearic acid, palmitic acid, cresotinic acid, oleic acid, elaidic acid, linoleic acid, linolenic acid, stearolic acid, ricinoleic acid, ricinoelaidic acid, brassidic acid, erucic acid, α-naphthoic acid, β-naphthoic acid, benzoic acid, 2,4,5-trichlorophenoxyacetic acid, 2,4-dichlorophenoxyacetic acid, quinoline carboxylic acid, nitrobenzoic acid, nitronaphthalenecarboxylic acid, and pyruvic acid are recited.

Particularly, it is preferable that the organic acid residue is a fatty acid residue because a coating film without cracking and peeling tends to be kept for a long period of time. In particular, zinc oleate (meth)acrylate or zinc versatate (meth)acrylate having high flexibility is preferably used as the monomer (d1).

As other preferred organic acids, monobasic cyclic organic acids other than aromatic organic acids can be recited. Examples of the monobasic cyclic organic acids include: organic acids including a cycloalkyl group, such as naphthenic acid; resin acids, such as tricyclic resin acids; and salts thereof.

Examples of the tricyclic resin acids include monobasic acids including a diterpene hydrocarbon skeleton. Examples of the monobasic acids including a diterpene hydrocarbon skeleton include compounds including an abietane, pimarane, isopimarane, or labdane skeleton. More specifically, examples thereof include abietic acid, neoabietic acid, dehydroabietic acid, hydrogenated abietic acid, parastrinic acid, pimaric acid, isopimaric acid, levopimaric acid, dextropimaric acid, sandaracopimaric acid, and salts thereof. Among these, abietic acid, hydrogenated abietic acid, and salts thereof are preferable from the viewpoint of antifouling performance of the coating film and the like.

As the monobasic cyclic organic acid, for example, pine resin, resin acid of pine and the like may be used. Examples of such things include rosins, hydrogenated rosins, disproportionated rosins, and naphthenic acid. The rosins include gum rosin, wood rosin, tall oil rosin, and the like. The rosins, the hydrogenated rosins, and the disproportionated rosins are preferable from the viewpoints of being inexpensive and easily available, being excellent in handleability, and easily improving antifouling performance.

The acid value of the monobasic cyclic organic acid is preferably greater than or equal to 100 mgKOH/g and less than or equal to 220 mgKOH/g, more preferably greater than or equal to 120 mgKOH/g and less than or equal to 190 mgKOH/g, and still more preferably greater than or equal to 140 mgKOH/g and less than or equal to 185 mgKOH/g.

When a monobasic cyclic organic acid having an acid value within the above range is used as the monobasic cyclic organic acid forming R³⁰, good antifouling performance of the coating film tends to be able to be maintained for a longer period of time.

An organic acid residue of the monomer (d1) may be formed of only one kind of organic acid or two or more kinds of organic acids.

Examples of a production method of the monomer (d1) including an organic acid residue as R³⁰ include a method of reacting an inorganic metal compound, with a carboxyl group-containing radical polymerizable monomer such as (meth)acrylic acid, and a nonpolymerizable organic acid (an organic acid forming the organic acid residue) in an organic solvent containing an alcoholic compound.

The constituent unit (D) derived from the monomer (d1) may also be formed by a method of reacting a resin obtainable by polymerization of a monomer composition including a carboxyl group-containing radical polymerizable monomer such as (meth)acrylic acid, with a metal compound, and a nonpolymerizable organic acid (an organic acid forming the organic acid residue).

The monomer (d2) is represented by the formula (VI'). By using the monomer (d2) as the monomer (d), a silicon atom-containing resin that is a (meth)acrylic resin further including a metal atom-containing group represented by the formula (VI) (this metal atom-containing group is a cross-linking group crosslinking polymer main chains) is obtained.

Examples of the monomer (d2) include magnesium acrylate [(CH₂=CHCOO)₂Mg], magnesium methacrylate [(CH₂=C(CH₃)COO)₂Mg], zinc acrylate [(CH₂=CHCOO)₂Zn], zinc methacrylate [(CH₂=C(CH₃)COO)₂Zn], copper acrylate [(CH₂=CHCOO)₂Cu], and copper methacrylate [(CH₂=C(CH₃)COO)₂Cu]. One or two or more of these can be appropriately selected and used as necessary.

Examples of a production method of the monomer (d2) include a method of reacting a polymerizable unsaturated organic acid such as (meth)acrylic acid with a metal compound in an organic solvent containing an alcoholic compound together with water. In this case, the content of water in the reactants is preferably adjusted to greater than or equal to 0.01% by mass and less than or equal to 30% by mass.

The silicon atom-containing resin may include both of a constituent unit derived from the monomer (d1) and a constituent unit derived from the monomer (d2).

In the case where the silicon atom-containing resin includes the constituent unit (D), from the viewpoint of antifouling performance of the coating film and the like, the content of the constituent unit (D) is preferably greater than or equal to 1 mass% and less than or equal to 30 mass%, more preferably greater than or equal to 2 mass% and less than or equal to 25 mass%, and still more preferably greater than or equal to 4 mass% and less than or equal to 20 mass% in all constituent units contained in the silicon atom-containing resin.

When the silicon atom-containing resin includes the constituent unit (D), the ratio of the content of the constituent unit (D) to the content of the constituent unit (A) is preferably greater than or equal to 0.5 parts by mass and less than or equal to 50 parts by mass, more preferably greater than or equal to 1 part by mass and less than or equal to 40 parts by mass, still more preferably greater than or equal to 2 parts by mass and less than or equal to 35 parts by mass, and yet still more preferably greater than or equal to 5 parts by mass and less than or equal to 30 parts by mass, and may be less than or equal to 25 parts by mass, less than or equal to 20 parts by mass, or less than or equal to 15 parts by mass, with respect to 100 parts by mass of the content of the constituent unit (A).

### (1-6) Monomer (e)

The silicon atom-containing resin can further have a constituent unit (E) derived from a monomer (e) which is a polyfunctional (meth)acrylic acid ester having two or more (meth)acryloyl groups. When the silicon atom-containing resin further has the constituent unit (E), the dynamic antifouling property and/or crack resistance of the coating film can be further enhanced.

The silicon atom-containing resin may include two or more kinds of constituent units (E) derived from the monomer (e).

Examples of the monomer (b) include difunctional (meth)acrylates having two (meth)acryloyloxy groups in the molecule, and tri- or more functional (meth)acrylates having three or more (meth)acryloyloxy groups in the molecule.

Examples of the difunctional (meth)acrylates include a compound (e-1) represented by a formula (e-1). 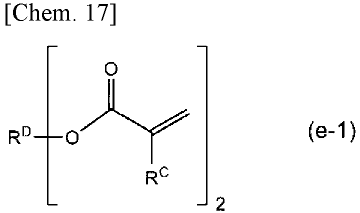 [In the formula, R^{C} each independently represents a hydrogen atom or a methyl group, R^{D} represents a divalent hydrocarbon group that may have a substituent, and at least one -CH₂- of the hydrocarbon group may be replaced by -O- or -C(=O)-.]

R^{C} is preferably a methyl group.

R^{D} is not particularly limited, and examples thereof include an alkylene group and a poly(oxyalkylene) group. The number of carbon atoms of the alkylene group may be, for example, greater than or equal to 1 and less than or equal to 20, greater than or equal to 2 and less than or equal to 12, or greater than or equal to 3 and less than or equal to 10. The alkylene group may be linear, branched, or cyclic.

The poly(oxyalkylene) group can be represented as -(oxyalkylene group)ₓ-. x represents the number of repetitions of oxyalkylene groups, and it may be, for example, greater than or equal to 1 and less than or equal to 50, greater than or equal to 1 and less than or equal to 23, greater than or equal to 2 and less than or equal to 23, greater than or equal to 2 and less than or equal to 20, greater than or equal to 2 and less than or equal to 12, or greater than or equal to 2 and less than or equal to 10. The number of carbon atoms of the alkylene group in the oxyalkylene group may be, for example, greater than or equal to 2 and less than or equal to 6, greater than or equal to 2 and less than or equal to 4, or greater than or equal to 2 and less than or equal to 3.

Specific examples of the difunctional (meth)acrylates include ethylene glycol di(meth)acrylate, 1,3-butanediol di(meth)acrylate, 1,4-butanediol di(meth)acrylate, 1,5-pentanediol di(meth)acrylate, 3-methyl-1,5-pentanediol di(meth)acrylate, 1,6-hexanediol di(meth)acrylate, neopentyl glycol di(meth)acrylate, 1,8-octanediol di(meth)acrylate, 1,9-nonanediol di(meth)acrylate, 1,10-decanediol di(meth)acrylate, tricyclodecane dimethanol di(meth)acrylate, diethylene glycol di(meth)acrylate, triethylene glycol di(meth)acrylate, polyethylene glycol di(meth)acrylate (the number of repetitions of oxyalkylene groups is, for example, greater than or equal to 4 and less than or equal to 23), propylene glycol di(meth)acrylate, dipropylene glycol di(meth)acrylate, tripropylene glycol di(meth)acrylate, and polypropylene glycol di(meth)acrylate (the number of repetitions of oxyalkylene groups is, for example, greater than or equal to 4 and less than or equal to 23).

Examples of the tri- or more functional (meth)acrylates include glycerol tri(meth)acrylate, trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, tripentaerythritol octa(meth)acrylate, tripentaerythritol hepta(meth)acrylate, tetrapentaerythritol deca(meth)acrylate, tetrapentaerythritol nona(meth)acrylate, tris(2-(meth)acryloyloxyethyl) isocyanurate, ethylene glycol-modified pentaerythritol tetra(meth)acrylate, ethylene glycol-modified trimethylolpropane tri(meth)acrylate, ethoxylated trimethylolpropane tri(meth)acrylate, ethylene glycol-modified dipentaerythritol hexa(meth)acrylate, ethoxylated dipentaerythritol hexa(meth)acrylate, propylene glycol-modified pentaerythritol tetra(meth)acrylate, propylene glycol-modified dipentaerythritol hexa(meth)acrylate, caprolactone-modified pentaerythritol tetra(meth)acrylate, caprolactone-modified dipentaerythritol hexa(meth)acrylate, pentaerythritol triacrylate succinic acid monoester, dipentaerythritol pentaacrylate succinic acid monoester, pentaerythritol triacrylate maleic acid monoester, and dipentaerythritol pentaacrylate maleic acid monoester.

The tri- or more functional (meth)acrylate preferably has 3 to 6 functional groups, more preferably 3 or 4 functional groups.

When the silicon atom-containing resin includes the constituent unit (E), the content of the constituent unit (E) derived from the monomer (e) is preferably greater than or equal to 0.1 mass%, more preferably greater than or equal to 0.5 mass%, and still more preferably greater than or equal to 1 mass%, and may be greater than or equal to 2 mass%, greater than or equal to 3 mass%, greater than or equal to 5 mass%, or greater than or equal to 10 mass% in all constituent units contained in the silicon atom-containing resin, from the viewpoint of further enhancing crack resistance. The content of the constituent unit (E) is preferably less than or equal to 30 mass%, more preferably less than or equal to 25 mass%, still more preferably less than or equal to 20 mass%, yet still more preferably less than or equal to 15 mass%, particularly preferably less than or equal to 10 mass%. When the content of the constituent unit (E) is too high, the resin tends to be gelled at the time of preparation of the silicon atom-containing resin.

When the silicon atom-containing resin includes the constituent unit (E), the ratio of the content of the constituent unit (E) to the content of the constituent unit (A) is preferably greater than or equal to 1 part by mass and less than or equal to 50 parts by mass, more preferably greater than or equal to 1 part by mass and less than or equal to 40 parts by mass, and still more preferably greater than or equal to 2 parts by mass and less than or equal to 30 parts by mass, with respect to 100 parts by mass of the content of the constituent unit (A).

### (1-7) Other monomer

The silicon atom-containing resin may include a constituent unit (F) derived from a monomer (f) other than the above. The silicon atom-containing resin may include two or more kinds of constituent units (F).

The other monomer (f) is not particularly limited as long as it is an unsaturated monomer copolymerizable with the monomers (a) to (e), and examples thereof include:
(meth)acrylic acid ester monomers not belonging to the monomers (c) and (e), such as methyl (meth)acrylate, ethyl (meth)acrylate, 2-methoxyethyl (meth)acrylate, 2-ethoxyethyl (meth)acrylate, phenoxyethyl (meth)acrylate, 2-(2-ethylhexaoxy)ethyl (meth)acrylate, 1-methyl-2-methoxyethyl (meth)acrylate, 3-methoxybutyl (meth)acrylate, 3-methyl-3-methoxybutyl (meth)acrylate, m-methoxyphenyl (meth)acrylate, p-methoxyphenyl (meth)acrylate, o-methoxyphenylethyl (meth)acrylate, m-methoxyphenylethyl (meth)acrylate, p-methoxyphenylethyl (meth)acrylate, n-propyl (meth)acrylate, iso-propyl (meth)acrylate, n-butyl (meth)acrylate, iso-butyl (meth)acrylate, tert-butyl (meth)acrylate, 2-ethylhexyl (meth)acrylate, lauryl (meth)acrylate, stearyl (meth)acrylate, benzyl (meth)acrylate, phenyl (meth)acrylate, isobornyl (meth)acrylate, cyclohexyl (meth)acrylate, and glycidyl (meth)acrylate;
vinyl monomers containing a primary or secondary amino group, such as butylaminoethyl (meth)acrylate and (meth)acrylamide;
vinyl monomers containing a tertiary amino group, such as dimethylaminoethyl (meth)acrylate, diethylaminoethyl (meth)acrylate, dimethylaminopropyl (meth)acrylate, dimethylaminobutyl (meth)acrylate, dibutylaminoethyl (meth)acrylate, dimethylaminoethyl (meth)acrylamide, and dimethylaminopropyl (meth)acrylamide;
heterocyclic basic monomers, such as vinylpyrrolidone, vinylpyridine, and vinylcarbazole; and
other vinyl-type monomers, such as styrene, vinyltoluene, α-methylstyrene, (meth)acrylonitrile, vinyl acetate, and vinyl propionate.

The silicon atom-containing resin preferably includes methyl methacrylate.

In the case where the silicon atom-containing resin includes the constituent unit (F), the content of the constituent unit (F) is usually greater than or equal to 0.1 mass% and less than or equal to 85 mass%, preferably greater than or equal to 1 mass% and less than or equal to 80 mass%, more preferably greater than or equal to 5 mass% and less than or equal to 75 mass%, still more preferably greater than or equal to 10 mass% and less than or equal to 70 mass%, and yet still more preferably greater than or equal to 20 mass% and less than or equal to 70 mass% in all constituent units contained in the silicon atom-containing resin. When the content of the constituent unit (F) is greater than or equal to 0.1% by mass, it is possible to balance various properties of the resulting coating composition and coating film. When the content of the constituent unit (F) is less than or equal to 85 mass%, a coating film that exhibits sufficient antifouling performance can be formed even when an antifouling agent is not separately contained.

### (1-8) Molecular weight of silicon atom-containing resin

The number average molecular weight of the silicon atom-containing resin is usually greater than or equal to 2,000 and less than or equal to 100,000, preferably greater than or equal to 3,000 and less than or equal to 50,000, and more preferably greater than or equal to 5,000 and less than or equal to 30,000. When the number average molecular weight of the silicon atom-containing resin is greater than or equal to 2,000, the coating film formed from the coating composition tends to be able to develop antifouling performance. When the number average molecular weight of the silicon atom-containing resin is less than or equal to 100,000, there is a tendency that the silicon atom-containing resin is likely to be uniformly dispersed in the coating composition. The number average molecular weight of the silicon atom-containing resin is a number average molecular weight in terms of polystyrene measured by gel permeation chromatography (GPC).

### (1-9) Method of producing silicon atom-containing resin

The production method of the silicon atom-containing resin is not particularly limited, and for example, a method of reacting a monomer composition of the aforementioned monomers in the presence of a radical initiator at a reaction temperature of 60 to 180°C for 5 to 14 hours. Conditions of the polymerization reaction may be appropriately adjusted.

As the radical initiator, for example, 2,2-azobisisobutyronitrile, 2,2-azobis(2,4-dimethylvaleronitrile), 2,2-azobis(2-methylbutyronitrile), benzoyl peroxide, cumene hydroperoxidfe, lauryl peroxide, di-tert-butylperoxide, tert-butylperoxy-2-ethylhexanoate and the like are recited.

Examples of a polymerization method include a solution polymerization method, an emulsion polymerization method, and a suspension polymerization method that are carried out in an organic solvent. From the viewpoint of production efficiency and the like of the silicon atom-containing resin, the solution polymerization method is preferable. Examples of the organic solvent include common organic solvents such as toluene, xylene, methyl isobutyl ketone, and n-butyl acetate.

### (1-10) Content of silicon atom-containing resin

The content of the silicon atom-containing resin in the coating composition is preferably greater than or equal to 25 mass% and less than or equal to 99 mass%, more preferably greater than or equal to 30 mass% and less than or equal to 98 mass%, and still more preferably greater than or equal to 35 mass% and less than or equal to 97 mass%, and may be less than or equal to 90 mass%, less than or equal to 80 mass%, or less than or equal to 70 mass%, in the solid content contained in the coating composition. When the content of the silicon atom-containing resin is less than 25% by mass, the antifouling property and the adhesion of the coating film to the substrate tend to decrease. The solid content contained in the coating composition refers to the sum of the components other than a solvent contained in the coating composition.

### (1-11) Embodiments of silicon atom-containing resin

Preferable embodiments of the silicon atom-containing resin are listed below.
(i) Silicon atom-containing resin having constituent units derived from the monomer (a) and the monomer (b).
(ii) Silicon atom-containing resin having constituent units derived from the monomer (a) and the monomer (c).
(iii) Silicon atom-containing resin having constituent units derived from the monomer (a) and the monomer (e).
(iv) Silicon atom-containing resin having constituent units derived from the monomer (a), the monomer (b), and the monomer (e).
(v) Silicon atom-containing resin having constituent units derived from the monomer (a) and the monomer (d).
(vi) Silicon atom-containing resin having constituent units derived from the monomer (a), the monomer (b), and the monomer (d).
(vii) Silicon atom-containing resin according to any one of (i) and (iii) to (vi) above, further having a constituent unit derived from the monomer (c).

From the viewpoints of dynamic antifouling property and crack resistance, the silicon atom-containing resin preferably has a constituent unit derived from at least one kind of monomer selected from the monomer (b) and the monomer (d), and more preferably it has a constituent unit derived from the monomer (b).

From the viewpoints of dynamic antifouling property and crack resistance, the silicon atom-containing resin preferably has a constituent unit derived from the monomer (e), and more preferably it has constituent units derived from the monomer (b) and the monomer (e).

When the silicon atom-containing resin has a constituent unit derived from the monomer (d), the metal atom M in the monomer (d) is preferably Zn or Cu from the viewpoints of dynamic antifouling property and crack resistance, and more preferably it is Zn from the viewpoint of crack resistance.

When the silicon atom-containing resin further has a constituent unit derived from the monomer (c), dynamic antifouling property tends to be further enhanced.

### (2) Thermoplastic resin

The coating composition contains a thermoplastic resin other than the silicon atom-containing resin, and the thermoplastic resin includes a thermoplastic resin having a weight average molecular weight of greater than or equal to 1,000. Hereinafter, the thermoplastic resin having a weight average molecular weight of greater than or equal to 1,000 is also referred to as "a high molecular weight thermoplastic resin". The content of the high molecular weight thermoplastic resin in the coating composition is greater than or equal to 6.0 parts by mass and less than or equal to 11.0 parts by mass with respect to 100 parts by mass of the silicon atom-containing resin.

The coating composition may include two or more kinds of high molecular weight thermoplastic resins.

When the coating composition according to the present invention containing the silicon atom-containing resin and also a predetermined amount of the high molecular weight thermoplastic resin is used, the coating film formed therefrom can have excellent antifouling performance (dynamic antifouling property) and excellent crack resistance both at markedly high levels.

The weight average molecular weight of the high molecular weight thermoplastic resin is preferably greater than or equal to 2,000, more preferably greater than or equal to 2,500, still more preferably greater than or equal to 3,000, yet still more preferably greater than or equal to 4,000, from the viewpoint of enhancing the crack resistance of the coating film or from the viewpoint of further enhancing the dynamic antifouling property. From the viewpoint of enhancing the dynamic antifouling property and/or the crack resistance, the weight average molecular weight of the high molecular weight thermoplastic resin is preferably less than or equal to 200,000, more preferably less than or equal to 150,000, still more preferably less than or equal to 100,000, yet still more preferably less than or equal to 50,000, particularly preferably less than or equal to 25,000, yet particularly preferably less than or equal to 10,000, further particularly preferably less than or equal to 9,000, most preferably less than or equal to 6,000 or less than or equal to 5,000. The weight average molecular weight of the thermoplastic resin is the weight average molecular weight in terms of polystyrene measured by gel permeation chromatography (GPC).

Examples of the high molecular weight thermoplastic resin include chlorinated polyolefins such as chlorinated rubber, chlorinated polyethylene, and chlorinated polypropylene; polyvinyl ether; polypropylene sebacate; partially hydrogenated terphenyl; polyvinyl acetate; (meth)acrylic resins; polyether polyol; alkyd resins; polyester resins; vinyl chloride-based resins such as a vinyl chloride-vinyl acetate copolymer, a vinyl chloride-vinyl propionate copolymer, a vinyl chloride-isobutyl vinyl ether copolymer, a vinyl chloride-isopropyl vinyl ether copolymer, and a vinyl chloride-ethyl vinyl ether copolymer; silicone oils; and oil and fat, and purified products thereof.

Examples of the (meth)acrylic resin include homopolymers or copolymers formed from monomers selected from the above-mentioned (meth)acrylic acid ester monomers mentioned as examples of the other monomer (f), and specific examples thereof include poly (meth)acrylic acid alkyl esters such as methyl (meth)acrylate copolymers, ethyl (meth)acrylate copolymers, propyl (meth)acrylate copolymers, butyl (meth)acrylate copolymers, and cyclohexyl (meth)acrylate copolymers.

The (meth)acrylic resin may contain at least one kind of constituent unit selected from the group consisting of the constituent unit (B), the constituent unit (C), and the constituent unit (D) described above.

Among these, from the viewpoint of obtaining excellent antifouling performance and excellent crack resistance both at markedly high levels, the high molecular weight thermoplastic resin is preferably selected from polyvinyl ether, a vinyl chloride-isobutyl vinyl ether copolymer, a poly (meth)acrylic acid alkyl ester, and a (meth)acrylic resin containing the constituent unit (D).

The content of the high molecular weight thermoplastic resin is greater than or equal to 6.0 parts by mass and less than or equal to 11.0 parts by mass, preferably greater than or equal to 6.5 parts by mass and less than or equal to 10.5 parts by mass, more preferably greater than or equal to 7.0 parts by mass and less than or equal to 10.0 parts by mass, with respect to 100 parts by mass of the silicon atom-containing resin, from the viewpoint of obtaining dynamic antifouling property and crack resistance both at high levels.

The coating composition may contain a thermoplastic resin having a weight average molecular weight of less than 1,000. By further adding a thermoplastic resin of this type, it is possible to adjust the antifouling performance and/or the crack resistance of the coating film. Examples of the thermoplastic resin having a weight average molecular weight of less than 1,000 include chlorinated paraffin; rosin, hydrogenated rosin, naphthenic acid, fatty acid, and divalent metal salts of these; and the like. The thermoplastic resin having a weight average molecular weight of less than 1,000 may be a thermoplastic resin mentioned above as an example of the high molecular weight thermoplastic resin, having a weight average molecular weight of less than 1,000.

The content of the thermoplastic resin having a weight average molecular weight of less than 1,000, with respect to 100 parts by mass of the silicon atom-containing resin, is preferably less than or equal to 30 parts by mass, more preferably less than or equal to 20 parts by mass; and it may be less than or equal to 15 parts by mass, or less than or equal to 10 parts by mass, and it may be greater than or equal to 1 part by mass, or greater than or equal to 2 parts by mass.

### (3) Other components that may be contained in coating composition

The coating composition can contain one or two or more kinds of other components than the silicon atom-containing resin and the thermoplastic resin. Examples of the other components include additives such as a defoaming agent, an anti-sagging agent, a plasticizer, an antifouling agent, a water binder, a color separation inhibitor, an anti-settling agent, a coating film exhaustion conditioner, a UV absorber, a surface conditioner, a viscosity conditioner, a leveling agent, and a pigment disperser, pigments, and solvents. These additives, pigments, and solvents may be used singly or in combination of two or more kinds thereof.

A defoaming agent is an agent having a function of making the surface of foam to be formed nonuniform and suppressing the formation of foam, or an agent having a function of locally thinning the surface of formed foam and breaking the foam. Examples of the defoaming agent include silicon-based defoaming agents and non-silicon-based defoaming agents. The silicon-based defoaming agent is a defoaming agent containing a polysiloxane having surface activity or a modified product thereof, and the non-silicon-based defoaming agent is a defoaming agent other than a silicon-based defoaming agent (defoaming agent not containing polysiloxane or a modified product thereof). The silicon-based defoaming agent may be a fluorine-modified silicon-based defoaming agent. The fluorine-modified silicon-based defoaming agent is a defoaming agent containing a fluorine-modified polysiloxane.

Examples of the non-silicon-based defoaming agent include higher alcoholbased, higher alcohol derivative-based, fatty acid-based, fatty acid derivative-based, paraffin-based, (meth)acrylic polymer-based, and mineral oil-based defoaming agents. Examples of the silicon-based defoaming agent include types such as oil types, compound types, self-emulsifying types, and emulsion types.

As a defoaming agent, a commercially available product may be used. Examples of commercially available non-silicon-based defoaming agents include mineral oil-based defoaming agents such as "BYK-030" manufactured by BYK; and polymer-based defoaming agents such as "Disparlon OX68" manufactured by Kusumoto Chemicals, and "BYK-1790" manufactured by BYK. Examples of commercially available silicon-based defoaming agents other than fluorine-modified silicon-based defoaming agents include silicone oil-based defoaming agents such as "KF-96" manufactured by Shin-Etsu Chemical, and "BYK-081" manufactured by BYK. Examples of commercially available fluorine-modified silicon-based defoaming agents include fluorosilicone oil-based defoaming agents such as "BYK-063", "BYK-065", and "BYK-066N" manufactured by BYK, and "FA-630" manufactured by Shin-Etsu Chemical.

The content of the defoaming agent is greater than or equal to 0.002 parts by mass and less than or equal to 0.60 parts by mass, more preferably greater than or equal to 0.004 parts by mass and less than or equal to 0.55 parts by mass, still more preferably greater than or equal to 0.01 parts by mass and less than or equal to 0.40 parts by mass, and yet still more preferably greater than or equal to 0.01 parts by mass and less than or equal to 0.20 parts by mass, with respect to 100 parts by mass of the silicon atom-containing resin, from the viewpoint of improving the defoaming property.

The anti-sagging agent is an agent having a function of suppressing the occurrence of sagging of the coating composition that may occur during a time from the application of the coating composition to an object to be coated until the completion of drying of the coating film. Examples of the anti-sagging agent include an amide-based anti-sagging agent; bentonite-based anti-sagging agent; polyethylene wax such as oxidized polyethylene wax; hydrogenated castor oil wax; a long chain fatty acid esterbased polymer; polycarboxylic acid; a silica fine particle-based anti-sagging agent; and a mixture of two or more kinds thereof.

Examples of the amide-based anti-sagging agent include amide wax-based anti-sagging agents such as fatty acid amide wax and polyamide wax. Examples of the fatty acid amide wax include stearic acid amide wax and oleic acid amide wax.

As the anti-sagging agent, a commercially available product may be used. Examples of the commercially available product of the amide wax-based anti-sagging agent include "Tarene 7200-20" manufactured by Kyoeisha Chemical, and "Disparlon 6900-20X" and "Disparlon RE-8000" manufactured by Kusumoto Chemicals, and "Monoral 3300" manufactured by HS CHEM. Examples of other commercially available products of the anti-sagging agent include organic bentonite-based anti-sagging agents such as "Bentone 38" manufactured by Elementis Japan and "TIXOGEL" manufactured by BYK.

The content of the anti-sagging agent is greater than or equal to 0.1 parts by mass and less than or equal to 6.0 parts by mass, more preferably greater than or equal to 0.2 parts by mass and less than or equal to 5.0 parts by mass, and still more preferably greater than or equal to 0.25 parts by mass and less than or equal to 4.0 parts by mass, with respect to 100 parts by mass of the silicon atom-containing resin, from the viewpoint of improving the anti-sagging property.

The coating composition may contain a plasticizer. By further adding a plasticizer, it is possible to adjust the antifouling performance and/or the crack resistance of the coating film. Examples of the plasticizer include phthalate esters such as dioctyl phthalate (DOP), dimethyl phthalate, dicyclohexyl phthalate, and diisodecyl phthalate (DIDP); aliphatic dibasic acid esters such as isobutyl adipate and dibutyl sebacate; glycol esters such as diethylene glycol dibenzoate and pentaerythritol alkyl ester; phosphoric acid esters such as tricresyl phosphoric acid (tricresyl phosphate), triaryl phosphoric acid (triaryl phosphate), and trichloroethyl phosphoric acid; epoxy compounds such as epoxy soybean oil and octyl epoxystearate; organotin compounds such as dioctyltin laurate and dibutyltin laurate; and trioctyl trimellitic acid, and triacetylene.

The content of the plasticizer with respect to 100 parts by mass of the silicon atom-containing resin is preferably less than or equal to 30 parts by mass, more preferably less than or equal to 20 parts by mass; and it may be less than or equal to 15 parts by mass, or less than or equal to 10 parts by mass, and it may be greater than or equal to 1 part by mass, or greater than or equal to 2 parts by mass.

Since the coating film formed from the coating composition of the present invention can exhibit good antifouling performance due to the antifouling effect based on the silicon atom-containing resin, the coating film is not necessarily required to contain an antifouling agent separately from the silicon atom-containing resin. However, in order to further enhance the antifouling performance or to further enhance the long-term sustainability of the antifouling performance, an antifouling agent may be contained in the coating composition as necessary. As the antifouling agent, those known in the art may be used without particular limitation, and for example, inorganic compounds, organic compounds containing a metal, and organic compounds not containing a metal can be recited.

Examples of the antifouling agent include zinc oxide; cuprous oxide; manganese ethylene-bis-dithiocarbamate; zinc dimethyldithiocarbamate; 2-methylthio-4-t-butylamino-6-cyclopropylamino-s-triazine; 2,4,5,6-tetrachloroisophthalonitrile; N,N-dimethyldichlorophenyl urea; zinc ethylene-bis-dithiocarbamate; rhodan copper (cuprous thiocyanate); 4,5-dichloro-2-n-octyl-4-isothiazolin-3-one (4,5,-dichloro-2-n-octyl-3(2H)isothiazolone); N-(fluorodichloromethylthio)phthalimide; N,N'-dimethyl-N'-phenyl-(N-fluorodichloromethylthio)sulfamide; metal salts of pyrithione such as 2-pyridinethiol-1-oxide zinc salt (zinc pyrithione) and copper salt (copper pyrithione); tetramethylthiuram disulfide; 2,4,6-trichlorophenyl maleimide; 2,3,5,6-tetrachloro-4-(methylsulfonyl)pyridine; 3-iodo-2-propylbutyl carbamate; diiodomethyl-para-trisulfone; phenyl(bispyridyl)bismuth dichloride; 2-(4-thiazolyl)-benzimidazole; triphenylboronpyridine salt; stearylamine-triphenylboron; laurylamine-triphenylboron; bis dimethyl dithiocarbamoyl zinc ethylenebisdithiocarbamate; 1,1-dichloro-N-[(dimethylamino)sulfonyl]-1-fluoro-N-phenylmethanesulfenamide; 1,1-dichloro-N-[(dimethylamino)sulfonyl]-1-fluoro-N-(4-methylphenyl)methanesulfeneamide; N'-(3,4-dichlorophenyl)-N,N'-dimethyl urea; N'-t-butyl-N-cyclopropyl-6-(methylthio)-1,3,5-triazine-2,4-diamine; and 4-bromo-2-(4-chlorophenyl)-5-(trifluoromethyl)-1H-pyrrole-3-carbonitrile; 4-[1-(2,3-dimethylphenyl)ethyl]-1H-imidazole (general name: medetomidine).

Among these, the antifouling agent is preferably at least one kind selected from the group consisting of cuprous oxide, pyrithione metal salt, 4,5-dichloro-2-n-octyl-4-isothiazolin-3-one, 2-methylthio-4-t-butylamino-6-cyclopropylamino-s-triazine, 4-bromo-2-(4-chlorophenyl)-5-(trifluoromethyl)-1H-pyrrole-3-carbonitrile, and medetomidine.

When the coating composition includes an antifouling agent, the content of the antifouling agent in the coating composition is preferably greater than or equal to 0.1 parts by mass, and more preferably 0.2 parts by mass, and may be greater than or equal to 0.5 parts by mass, greater than or equal to 1 part by mass, or greater than or equal to 5 parts by mass, with respect to 100 parts by mass of the silicon atom-containing resin. The content of the antifouling agent in the coating composition is preferably less than or equal to 150 parts by mass, more preferably less than or equal to 120 parts by mass, and still more preferably less than or equal to 100 parts by mass, and may be less than or equal to 80 parts by mass, less than or equal to 60 parts by mass, less than or equal to 50 parts by mass, less than or equal to 40 parts by mass, less than or equal to 30 parts by mass, less than or equal to 20 parts by mass, or less than or equal to 10 parts by mass, with respect to 100 parts by mass of the silicon atom-containing resin. When the content of the antifouling agent falls within the above-mentioned range, the antifouling performance can be further enhanced and the long-term sustainability of the antifouling performance can be further enhanced, without adversely affecting various performances of the coating film to be obtained.

As the pigment, for example, extender pigments such as sedimentary barium, talc, clay, chalk, silica white, alumina white, bentonite, calcium carbonate, magnesium carbonate, silicic acid, silicates, aluminum oxide hydrates and calcium sulfate; and coloring pigments such as titanium oxide, zircon oxide, basic lead sulfate, tin oxide, carbon black, white lead, graphite, zinc sulfide, zinc oxide, chromic oxide, yellow nickel titanium, yellow chromium titanium, yellow iron oxide, red iron oxide (rouge), black iron oxide, azoic red and yellow pigment, chromium yellow, phthalocyanine green, phthalocyanine blue, ultramarine blue and quinacridone can be recited.

As the solvent, for example, hydrocarbons such as toluene, xylene, ethylbenzene, cyclopentane, octane, heptane, cyclohexane and white spirit; ethers such as dioxane, tetrahydrofuran, ethylene glycol monomethyl ether, ethylene glycol monoethyl ether, ethylene glycol monobutyl ether, ethylene glycol dibutyl ether, diethylene glycol monomethyl ether, diethylene glycol monoethyl ether and butyl cellosolve; esters such as butyl acetate, propyl acetate, benzyl acetate, ethylene glycol monomethyl ether acetate and ethylene glycol monoethyl ether acetate; ketones such as ethylisobutyl ketone and methylisobutyl ketone; alcohols such as n-butanol and propyl alcohol; and the like can be recited.

### (4) Preparation of coating composition

The coating composition can be prepared, for example, by adding, to the silicon atom-containing resin or a resin composition containing the same (for example, a solution or dispersion containing the silicon atom-containing resin), the high molecular weight thermoplastic resin and, as needed, other components, and mixing them by using a mixer such as a ball mill, a pebble mill, a roll mill, a sand grind mill, or a high speed disperser.

Preferably, the coating composition has a low VOC. VOC stands for Volatile Organic Compound, and it is a value (in g/L) calculated by firstly actually measuring the non-volatile matter (solid content; in mass%) of the coating composition and the specific gravity (in g/cm³) of the coating composition and then substituting them into the equation given below. Generally, when VOC is relatively high, the coating composition contains a relatively low amount of non-volatile matter, and when VOC is relatively low, it contains a relatively high amount of non-volatile matter. 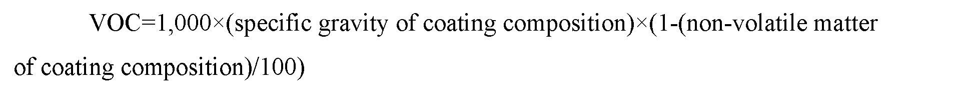 VOC=1,000×(specific gravity of coating composition)×(1-(non-volatile matter of coating composition)/100)

VOC of the coating composition is less than or equal to 570 or less than or equal to 550, for example, and it is preferably less than or equal to 500.

### <Antifouling coating film and composite coating film>

The antifouling coating film according to the present invention (hereinafter, also simply referred to as "coating film") is a coating film formed from the antifouling coating composition according to the present invention. The coating film is an antifouling coating film having antifouling performance. Since it is formed from the antifouling coating composition according to the present invention, the coating film can exhibit excellent antifouling performance and excellent crack resistance both at markedly high levels

The coating film can be formed by applying the coating composition on a surface of an object to be coated according to a routine method, and then removing a solvent by volatilization at room temperature or under heating as necessary. Examples of an application method of the coating composition include conventionally known methods such as immersion method, spray method, brush coating, roller, electrostatic coating, and electrodeposition coating. The thickness of the coating film is, for example, greater than or equal to 50 µm and less than or equal to 500 µm, and preferably greater than or equal to 100 µm and less than or equal to 400 µm.

Examples of the object to be coated include an underwater moving body such as a ship and an in-water structure. Examples of the in-water structure include various fish nets such as fish nets for farming and other fishing equipment; harbor facilities; oilfences; intake equipment of an electric generation plant or the like; piping such as water conduits for cooling; bridges, buoyage; industrial water system facilities; and submarine bases. The object to be coated is preferably an underwater moving body, and examples of the underwater moving body include ships, fishing nets, and fishing equipment.

An application surface of the object to be coated may be pretreated as necessary, or on a primer film of another coating composition such as an antirust coating composition (anticorrosion coating composition) formed on an object to be coated, a coating film formed from the coating composition of the present invention may be formed to produce a composite film.

According to the coating composition of the present invention, the silicon atom-containing resin itself serving as a vehicle can exhibit good antifouling performance, which makes it possible to eliminate the addition of antifouling agent, or to reduce the amount of addition thereof. Therefore, according to the coating composition of the present invention, it is possible to form a clear (highly transparent) antifouling coating film.

For example, in the composite film including a primer film formed from an antirust coating composition or the like and a coating film of the present invention formed on the primer film, by using a clear antifouling film as the coating film of the present invention and those having various color phases as the antirust coating composition, it is possible to provide a coated object such as a ship having a composite film-formed surface having a color phase that is not conventionally realized, while having antifouling performance. Also by forming an intermediate film of a paint having various color phases between the primer film of an antirust coating composition or the like and the clear antifouling film, it is possible to provide a coated object having a color phase that is not conventionally realized.

As the coating composition forming the intermediate film, for example, various coating compositions such as an antifouling coating composition, an epoxy resin coating composition, a urethane resin coating composition, a (meth)acrylic resin coating composition, a chlorinated rubber coating composition, an alkyd resin coating composition, a silicon resin coating composition, and a fluorine resin coating composition may be used. The antifouling coating composition forming the intermediate film may be the coating composition of the present invention, or a different antifouling coating composition such as a conventional antifouling coating composition containing a relatively large amount of antifouling agent.

The intermediate film may be formed on the entire surface of the primer film, or may be formed on part of the surface. The intermediate film and the primer film may be a used old coating film. **In** this case, the coating composition of the present invention and a coating film formed therefrom may be used for repairing the old coating film.

### [Examples]

The present invention will be described below in more detail by way of examples and comparative examples, but the present invention is not limited thereto.

### <Resin Production Example 1: Production of silicon atom-containing resin (S1)>

To a four-necked flask equipped with a thermometer, a condenser, a stirrer, a dropping funnel, a nitrogen inlet tube, and a temperature controller, 35.0 parts by mass of xylene and 35.0 parts by mass of n-butanol were added as solvents, and the resultant was maintained at 100°C. A mixture liquid obtained in advance by mixing 40.0 parts by mass of FM-0721 as the monomer (a), 14.2 parts by mass of TIPSMA as the monomer (b), 10.0 parts by mass of EHMA, 15.8 parts by mass of MMA, and 20.0 parts by mass of EA as the monomer (f), and 2.0 parts by mass of tert-butylperoxy-2-ethylhexanoate as a radical polymerization initiator was added to the dropping funnel and added dropwise to the four-necked flask at a constant velocity over 3 hours, and after completion of the dropwise addition, incubated for 30 minutes. Then, a mixture liquid of 24.0 parts by mass of xylene, 24 parts by mass of n-butanol, and 0.2 parts by mass of tert-butylperoxy-2-ethylhexanoate was added dropwise to the four-necked flask at a constant velocity over 30 minutes, and after completion of the dropwise addition, incubated for 1.5 hours, to obtain a resin composition (solution) including a silicon atom-containing resin (S1).

### <Resin production example 2: Production of silicon atom-containing resin (S2)>

To a four-necked flask equipped with a thermometer, a condenser, a stirrer, a dropping funnel, a nitrogen inlet tube, and a temperature controller, 35.0 parts by mass of xylene and 35.0 parts by mass of n-butanol were added as solvents, and the resultant was maintained at 100°C. A mixture liquid obtained in advance by mixing 40.0 parts by mass of FM-0721 as the monomer (a), 10.0 parts by mass of EHMA, 30.0 parts by mass of MMA, and 20.0 parts by mass of EA as the monomer (f), and 2.0 parts by mass of tert-butylperoxy-2-ethylhexanoate as a radical polymerization initiator was added to the dropping funnel and added dropwise to the four-necked flask at a constant velocity over 3 hours, and after completion of the dropwise addition, incubated for 30 minutes. Then, a mixture liquid of 15.0 parts by mass of xylene, 15.0 parts by mass of n-butanol, and 0.2 parts by mass of tert-butylperoxy-2-ethylhexanoate was added dropwise to the four-necked flask at a constant velocity over 30 minutes, and after completion of the dropwise addition, incubated for 1.5 hours, to obtain a resin composition (solution) including a silicon atom-containing resin (S2).

### <Resin production example 3: Production of silicon atom-containing resin (S3)>

To a four-necked flask equipped with a thermometer, a condenser, a stirrer, a dropping funnel, a nitrogen inlet tube, and a temperature controller, 35.0 parts by mass of xylene and 35.0 parts by mass of n-butanol were added as solvents, and the resultant was maintained at 100°C. A mixture liquid obtained in advance by mixing 40.0 parts by mass of FM-0721 as the monomer (a), 14.2 parts by mass of TIPSMA as the monomer (b), 5.0 parts by mass of CB-1 as the monomer (c), 10.0 parts by mass of EHMA, 10.8 parts by mass of MMA, and 20.0 parts by mass of EA as the monomer (f), and 2.0 parts by mass of tert-butylperoxy-2-ethylhexanoate as a radical polymerization initiator was added to the dropping funnel and added dropwise to the four-necked flask at a constant velocity over 3 hours, and after completion of the dropwise addition, incubated for 30 minutes. Then, a mixture liquid of 18.0 parts by mass of xylene, 18.0 parts by mass of n-butanol, and 0.2 parts by mass of tert-butylperoxy-2-ethylhexanoate was added dropwise to the four-necked flask at a constant velocity over 30 minutes, and after completion of the dropwise addition, incubated for 1.5 hours, to obtain a resin composition (solution) including a silicon atom-containing resin (S3).

### <Resin production example 4: Production of silicon atom-containing resin (S4)>

To a four-necked flask equipped with a thermometer, a condenser, a stirrer, a dropping funnel, a nitrogen inlet tube, and a temperature controller, 35.0 parts by mass of xylene and 35.0 parts by mass of n-butanol were added as solvents, and the resultant was maintained at 100°C. A mixture liquid obtained in advance by mixing 40.0 parts by mass of FM-0721 as the monomer (a), 14.2 parts by mass of TIPSA as the monomer (b), 10.0 parts by mass of EHMA, 15.8 parts by mass of MMA, and 20.0 parts by mass of EA as the monomer (f), and 2.0 parts by mass of tert-butylperoxy-2-ethylhexanoate as a radical polymerization initiator was added to the dropping funnel and added dropwise to the four-necked flask at a constant velocity over 3 hours, and after completion of the dropwise addition, incubated for 30 minutes. Then, a mixture liquid of 4.0 parts by mass of xylene, 4.0 parts by mass of n-butanol, and 0.2 parts by mass of tert-butylperoxy-2-ethylhexanoate was added dropwise to the four-necked flask at a constant velocity over 30 minutes, and after completion of the dropwise addition, incubated for 1.5 hours, to obtain a resin composition (solution) including a silicon atom-containing resin (S4).

### <Resin production example 5: Production of silicon atom-containing resin (S5)>

To a four-necked flask equipped with a thermometer, a condenser, a stirrer, a dropping funnel, a nitrogen inlet tube, and a temperature controller, 35.0 parts by mass of xylene and 35.0 parts by mass of n-butanol were added as solvents, and the resultant was maintained at 100°C. A mixture liquid obtained in advance by mixing 40.0 parts by mass of FM-0721 as the monomer (a), 14.2 parts by mass of TIPSA as the monomer (b), 1.0 part by mass of NPG as the monomer (e), 10.0 parts by mass of EHMA, 15.8 parts by mass of MMA, and 19.0 parts by mass of EA as the monomer (f), and 2.0 parts by mass of tert-butylperoxy-2-ethylhexanoate as a radical polymerization initiator was added to the dropping funnel and added dropwise to the four-necked flask at a constant velocity over 3 hours, and after completion of the dropwise addition, incubated for 30 minutes. Then, a mixture liquid of 4.0 parts by mass of xylene, 4.0 parts by mass of n-butanol, and 0.2 parts by mass of tert-butylperoxy-2-ethylhexanoate was added dropwise to the four-necked flask at a constant velocity over 30 minutes, and after completion of the dropwise addition, incubated for 1.5 hours, to obtain a resin composition (solution) including a silicon atom-containing resin (S5).

### <Resin production example 6: Production of silicon atom-containing resin (S6)>

To a four-necked flask equipped with a thermometer, a condenser, a stirrer, a dropping funnel, a nitrogen inlet tube, and a temperature controller, 80.0 parts by mass of xylene was added as a solvent, and the resultant was maintained at 95°C. A mixture liquid obtained in advance by mixing 40.0 parts by mass of KF-2012 as the monomer (a), 15.0 parts by mass of TIPSA as the monomer (b), 5.0 parts by mass CB-1 as the monomer (c), 1.0 part by mass of NPG as the monomer (e), 20.0 parts by mass of t-BMA, 8.0 parts by mass of n-BMA, 5.5 parts by mass of MMA, and 5.5 parts by mass of EA as the monomer (f), and 1.1 parts by mass of tert-butylperoxy-2-ethylhexanoate as a radical polymerization initiator was added to the dropping funnel and added dropwise to the four-necked flask at a constant velocity over 3 hours, and after completion of the dropwise addition, incubated for 60 minutes. Then, a mixture liquid of 20.0 parts by mass of xylene and 0.2 parts by mass of tert-butylperoxy-2-ethylhexanoate was added dropwise to the four-necked flask at a constant velocity over 30 minutes, and after completion of the dropwise addition, incubated for 1.5 hours, to obtain a resin composition (solution) including a silicon atom-containing resin (S6).

### <Resin production example 7: Production of silicon atom-containing resin (S7)>

To a four-necked flask equipped with a thermometer, a condenser, a stirrer, a dropping funnel, a nitrogen inlet tube, and a temperature controller, 50.0 parts by mass of xylene was added as a solvent, and the resultant was maintained at 95°C. A mixture liquid obtained in advance by mixing 21.0 parts by mass of FM-0721 as the monomer (a), 4.0 parts by mass of M-40G and 1.0 part by mass of HEMA as the monomer (c), 20.0 parts by mass of t-BMA, 10.0 parts by mass of n-BMA, 5.0 parts by mass of EHMA, and 39.0 parts by mass of MMA as the monomer (f), 10.0 parts by mass of xylene, and 1.2 parts by mass of tert-butylperoxy-2-ethylhexanoate as a radical polymerization initiator was added to the dropping funnel and added dropwise to the four-necked flask at a constant velocity over 3 hours, and after completion of the dropwise addition, incubated for 80 minutes. Then, a mixture liquid of 40.0 parts by mass of xylene and 0.3 parts by mass of tert-butylperoxy-2-ethylhexanoate was added dropwise to the four-necked flask at a constant velocity over 30 minutes, and after completion of the dropwise addition, incubated for 1.5 hours, to obtain a resin composition (solution) including a silicon atom-containing resin (S7).

### <Resin production example 8: Production of silicon atom-containing resin (S8)>

To a four-necked flask equipped with a thermometer, a condenser, a stirrer, a dropping funnel, a nitrogen inlet tube, and a temperature controller, 50.0 parts by mass of xylene was added as a solvent, and the resultant was maintained at 95°C. A mixture liquid obtained in advance by mixing 21.0 parts by mass of FM-0711 as the monomer (a), 4.0 parts by mass of M-40G and 1.0 part by mass of HEMA as the monomer (c), 20.0 parts by mass of t-BMA, 10.0 parts by mass of n-BMA, 5.0 parts by mass of EHMA, and 39.0 parts by mass of MMA as the monomer (f), 10.0 parts by mass of xylene, and 1.2 parts by mass of tert-butylperoxy-2-ethylhexanoate as a radical polymerization initiator was added to the dropping funnel and added dropwise to the four-necked flask at a constant velocity over 3 hours, and after completion of the dropwise addition, incubated for 80 minutes. Then, a mixture liquid of 40.0 parts by mass of xylene and 0.3 parts by mass of tert-butylperoxy-2-ethylhexanoate was added dropwise to the four-necked flask at a constant velocity over 30 minutes, and after completion of the dropwise addition, incubated for 1.5 hours, to obtain a resin composition (solution) including a silicon atom-containing resin (S8).

### <Resin production example 9: Production of silicon atom-containing resin (S9)>

To a four-necked flask equipped with a thermometer, a condenser, a stirrer, a dropping funnel, a nitrogen inlet tube, and a temperature controller, 50.0 parts by mass of xylene was added as a solvent, and the resultant was maintained at 95°C. A mixture liquid obtained in advance by mixing 21.0 parts by mass of TM-0701T as the monomer (a), 4.0 parts by mass of M-40G and 1.0 part by mass of HEMA as the monomer (c), 20.0 parts by mass of t-BMA, 10.0 parts by mass of n-BMA, 5.0 parts by mass of EHMA, and 39.0 parts by mass of MMA as the monomer (f), 10.0 parts by mass of xylene, and 1.2 parts by mass of tert-butylperoxy-2-ethylhexanoate as a radical polymerization initiator was added to the dropping funnel and added dropwise to the four-necked flask at a constant velocity over 3 hours, and after completion of the dropwise addition, incubated for 80 minutes. Then, a mixture liquid of 40.0 parts by mass of xylene and 0.3 parts by mass of tert-butylperoxy-2-ethylhexanoate was added dropwise to the four-necked flask at a constant velocity over 30 minutes, and after completion of the dropwise addition, incubated for 1.5 hours, to obtain a resin composition (solution) including a silicon atom-containing resin (S9).

### <Resin production example 10: Production of silicon atom-containing resin (S10)>

### (1) Production of metal atom-containing polymerizable monomer mixture (M1): Monomer (d)

To a four-necked flask equipped with a condenser, a thermometer, a dropping funnel, and a stirrer, 85.4 parts by mass of PGM (propylene glycol methyl ether) and 40.7 parts by mass of zinc oxide were added, and while stirring, the temperature was raised to 75°C. Then, through the dropping funnel, a mixture of 43.1 parts by mass of MAA (methacrylic acid), 36.1 parts by mass of AA (acrylic acid), and 5.0 parts by mass of water was added dropwise at a constant velocity over 3 hours. Stirring was continued for another 2 hours, and then 36.0 parts by mass of PGM was added thereto, and thereby a transparent, metal atom-containing polymerizable monomer mixture (M1) (solid content concentration, 44.8 parts by mass) was obtained. The resulting metal atom-containing polymerizable monomer mixture (M1) contains zinc (meth)acrylate belonging to the monomer (d2) represented by the formula (VI') mentioned above.

### (2) Production of silicon atom-containing resin (S10)

To a four-necked flask equipped with a thermometer, a condenser, a stirrer, a dropping funnel, a nitrogen inlet tube, and a temperature controller, 15.0 parts by mass of PGM and 65.0 parts by mass of xylene as solvents and 4.0 parts by mass of EA as the monomer (f) were added, and while stirring, the temperature was raised to and maintained at 100°C. A mixture liquid obtained in advance by mixing 40.0 parts by mass of FM-0711 as the monomer (a), 21.7 parts by mass of the metal atom-containing polymerizable monomer mixture (M1) produced above in (1) as the monomer (d), 20.4 parts by mass of MMA and 13.9 parts by mass of EA as the monomer (f), 10.0 parts by mass of xylene, 1.2 parts by mass of a chain transfer agent (α-methylstyrene dimer), 2.5 parts by mass of azobisisobutyronitrile (AIBN), and 0.8 parts by mass of azobismethylbutyronitrile (AMBN) was added to the dropping funnel and added dropwise to the four-necked flask at a constant velocity over 6 hours. Subsequently, 0.5 parts by mass of t-butyl peroctoate and 10.0 parts by mass of xylene were added dropwise over 30 minutes, and the resultant was stirred for 1 hour and 30 minutes, followed by addition of 10.1 parts by mass of xylene to obtain a resin composition (solution) including a silicon atom-containing resin (S10).

### <Resin production example 11: Production of silicon atom-containing resin (S11)>

To a four-necked flask equipped with a thermometer, a condenser, a stirrer, a dropping funnel, a nitrogen inlet tube, and a temperature controller, 50.0 parts by mass of xylene was added as a solvent, and the resultant was maintained at 95°C. A mixture liquid obtained in advance by mixing 30.0 parts by mass of FM-0725 as the monomer (a), 6.0 parts by mass of t-BMA, 10.0 parts by mass of EHMA , 30.0 parts by mass of MMA, and 10.0 parts by mass of EA as the monomer (f), 14.0 parts by mass of AA, 10.0 parts by mass of xylene, and 1.2 parts by mass of tert-butylperoxy-2-ethylhexanoate as a radical polymerization initiator was added to the dropping funnel and added dropwise to the four-necked flask at a constant velocity over 3 hours, and after completion of the dropwise addition, incubated for 30 minutes. Then, a mixture liquid of 40.0 parts by mass of xylene and 0.3 parts by mass of tert-butylperoxy-2-ethylhexanoate was added dropwise to the four-necked flask at a constant velocity over 30 minutes, and after completion of the dropwise addition, incubated for 1.0 hour, to obtain a resin composition (solution) including a carboxyl group-containing resin.

Subsequently, to a similar reaction vessel, 100 parts by mass of the resin composition, 18.6 parts by mass of zinc(II) acetate, 33.2 parts by mass of naphthenic acid (NA-165), and 60.0 parts by mass of xylene were added, and the temperature was raised to a reflux temperature, and reaction was continued for 18 hours while removing the mixture liquid of acetic acid, water, and solvent in distillate and adding the same amount of xylene thereto. The end point of the reaction was determined by quantifying the amount of acetic acid in the distillate. After cooling the reaction liquid, n-butanol and xylene were added so as to achieve a solid content concentration of the resin composition of 50.2 mass%, and thereby a resin composition (solution) including a resin (S11) was obtained. The resin (S11) was obtained by converting the carboxyl group of the above-mentioned carboxyl group-containing resin to -COO-Zn²⁺ (⁻OOC-Y). Y is the structure of the naphthenic acid except the carboxyl group.

### <Resin production example 12: Production of silicon atom-containing resin (S12)>

To a four-necked flask equipped with a thermometer, a condenser, a stirrer, a dropping funnel, a nitrogen inlet tube, and a temperature controller, 35.0 parts by mass of xylene and 35.0 parts by mass of n-butanol were added as solvents, and the resultant was maintained at 100°C. A mixture liquid obtained in advance by mixing 40.0 parts by mass of FM-0711 as the monomer (a), 10.0 parts by mass of EHMA, 15.8 parts by mass of MMA, and 20.0 parts by mass of EA as the monomer (f), 14.2 parts by mass of AA, and 2.0 parts by mass of tert-butylperoxy-2-ethylhexanoate as a radical polymerization initiator was added to the dropping funnel and added dropwise to the four-necked flask at a constant velocity over 3 hours, and after completion of the dropwise addition, incubated for 30 minutes. Then, a mixture liquid of 25.0 parts by mass of xylene, 25.0 parts by mass of n-butanol, and 0.2 parts by mass of tert-butylperoxy-2-ethylhexanoate was added dropwise to the four-necked flask at a constant velocity over 30 minutes, and after completion of the dropwise addition, incubated for 1.5 hours, to obtain a resin composition (solution) including a carboxyl group-containing resin.

Subsequently, to a similar reaction vessel, 100 parts by mass of the resin composition, 19.6 parts by mass of copper(II) acetate, 27.5 parts by mass of naphthenic acid (NA-200), and 60.0 parts by mass of xylene were added, and the temperature was raised to a reflux temperature, and reaction was continued for 18 hours while removing the mixture liquid of acetic acid, water, and solvent in distillate and adding the same amount of xylene thereto. The end point of the reaction was determined by quantifying the amount of acetic acid in the distillate. After cooling the reaction liquid, xylene was added so as to achieve a solid content concentration of the resin composition of 46.4 mass%, and thereby a resin composition (solution) including a resin (S12) was obtained. The resin (S12) was obtained by converting the carboxyl group of the above-mentioned carboxyl group-containing resin to -COO-Cu²⁺ (⁻OOC-Y). Y is the structure of the naphthenic acid except the carboxyl group.

### <Resin production example 13: Production of silicon atom-containing resin (S13)>

To a four-necked flask equipped with a thermometer, a condenser, a stirrer, a dropping funnel, a nitrogen inlet tube, and a temperature controller, 50.0 parts by mass of xylene was added as a solvent, and the resultant was maintained at 95°C. A mixture liquid obtained in advance by mixing 35.0 parts by mass of FM-0721 as the monomer (a), 19.0 parts by mass of TIPSA as the monomer (b), 1.0 part by mass of M-230G as the monomer (c), 10.0 parts by mass of n-BA and 26.0 parts by mass of MMA as the monomer (f), 9.0 parts by mass of AA, 10 parts by mass of xylene, and 1.5 parts by mass of tert-butylperoxy-2-ethylhexanoate as a radical polymerization initiator was added to the dropping funnel and added dropwise to the four-necked flask at a constant velocity over 3 hours, and after completion of the dropwise addition, incubated for 30 minutes. Then, a mixture liquid of 40.0 parts by mass of xylene and 0.3 parts by mass of tert-butylperoxy-2-ethylhexanoate was added dropwise to the four-necked flask at a constant velocity over 30 minutes, and after completion of the dropwise addition, incubated for 1.5 hours, to obtain a resin composition (solution) including a carboxyl group-containing resin.

Subsequently, to a similar reaction vessel, 100 parts by mass of the resin composition, 13.1 parts by mass of copper(II) acetate, 22.1 parts by mass of hydrogenated rosin (HYPALE CH), and 60.0 parts by mass of xylene were added, and the temperature was raised to a reflux temperature, and reaction was continued for 18 hours while removing the mixture liquid of acetic acid, water, and solvent in distillate and adding the same amount of xylene thereto. The end point of the reaction was determined by quantifying the amount of acetic acid in the distillate. After cooling the reaction liquid, xylene was added so as to achieve a solid content concentration of the resin composition of 50.5 mass%, and thereby a resin composition (solution) including a resin (S13) was obtained. The resin (S13) was obtained by converting the carboxyl group of the above-mentioned carboxyl group-containing resin to -COO-Cu²⁺ (⁻OOC-Y). Y is the structure of the hydrogenated rosin except the carboxyl group.

### <Resin production example 14: Production of silicon atom-containing resin (S14)>

To a four-necked flask equipped with a thermometer, a condenser, a stirrer, a dropping funnel, a nitrogen inlet tube, and a temperature controller, 50.0 parts by mass of xylene was added as a solvent, and the resultant was maintained at 95°C. A mixture liquid obtained in advance by mixing 35.0 parts by mass of FM-0721 as the monomer (a), 19.0 parts by mass of TIPSA as the monomer (b), 1.0 part by mass of M-230G as the monomer (c), 10.0 parts by mass of n-BA and 26.0 parts by mass of MMA as the monomer (f), 9.0 parts by mass of AA, 10 parts by mass of xylene, and 1.5 parts by mass of tert-butylperoxy-2-ethylhexanoate as a radical polymerization initiator was added to the dropping funnel and added dropwise to the four-necked flask at a constant velocity over 3 hours, and after completion of the dropwise addition, incubated for 30 minutes. Then, a mixture liquid of 40.0 parts by mass of xylene and 0.3 parts by mass of tert-butylperoxy-2-ethylhexanoate was added dropwise to the four-necked flask at a constant velocity over 30 minutes, and after completion of the dropwise addition, incubated for 1.5 hours, to obtain a resin composition (solution) including a carboxyl group-containing resin.

Subsequently, to a similar reaction vessel, 100 parts by mass of the resin composition, 13.1 parts by mass of zinc(II) acetate, 22.1 parts by mass of hydrogenated rosin (HYPALE CH), and 60.0 parts by mass of xylene were added, and the temperature was raised to a reflux temperature, and reaction was continued for 18 hours while removing the mixture liquid of acetic acid, water, and solvent in distillate and adding the same amount of xylene thereto. The end point of the reaction was determined by quantifying the amount of acetic acid in the distillate. After cooling the reaction liquid, n-butanol and xylene were added so as to achieve a solid content concentration of the resin composition of 50.7 mass%, and thereby a resin composition (solution) including a resin (S14) was obtained. The resin (S14) was obtained by converting the carboxyl group of the above-mentioned carboxyl group-containing resin to -COO-Zn²⁺ (⁻OOC-Y). Y is the structure of the hydrogenated rosin except the carboxyl group.

### <Resin production example 15: Production of silicon atom-containing resin (S15)>

To a four-necked flask equipped with a thermometer, a condenser, a stirrer, a dropping funnel, a nitrogen inlet tube, and a temperature controller, 70.0 parts by mass of xylene and 30.0 parts by mass of n-butanol were added as solvents, and the resultant was maintained at 105°C. A mixture liquid obtained in advance by mixing 10.0 parts by mass of FM-0711, 10.0 parts by mass of FM-0721, and 10.0 parts by mass of X-22-164C as the monomer (a), 30.0 parts by mass of TIPSA as the monomer (b), 5.0 parts by mass of M-90G as the monomer (c), 10.0 parts by mass of EHMA, 8.6 parts by mass of MMA, and 10.0 parts by mass of EA as the monomer (f), 6.4 parts by mass of AA, and 2.0 parts by mass of azobisisobutyronitrile as a radical polymerization initiator was added to the dropping funnel and added dropwise to the four-necked flask at a constant velocity over 3 hours, and after completion of the dropwise addition, incubated for 60 minutes to obtain a resin composition (solution) including a carboxyl group-containing resin.

Subsequently, to a similar reaction vessel, 100 parts by mass of the resin composition, 9.3 parts by mass of copper(II) acetate, 27.5 parts by mass of naphthenic acid (NA-200), and 60.0 parts by mass of xylene were added, and the temperature was raised to a reflux temperature, and reaction was continued for 18 hours while removing the mixture liquid of acetic acid, water, and solvent in distillate and adding the same amount of xylene thereto. The end point of the reaction was determined by quantifying the amount of acetic acid in the distillate. After cooling the reaction liquid, xylene was added so as to achieve a solid content concentration of the resin composition of 51.8 mass%, and thereby a resin composition (solution) including a resin (S15) was obtained. The resin (S15) was obtained by converting the carboxyl group of the above-mentioned carboxyl group-containing resin to -COO-Cu²⁺ (⁻OOC-Y). Y is the structure of the naphthenic acid except the carboxyl group.

Table 1 and Table 2 show the monomers used in the resin production examples, as well as the use amounts (parts by mass) thereof. As for the resin production examples 11 to 15, the monomers used in the production of carboxyl group-containing resins and the use amounts thereof are shown.

The number average molecular weight (Mn) of the obtained resins (S1) to (S15) and the solid content concentration of the obtained resin compositions were measured. The results are also shown in Table 1 and Table 2. The methods of measurement are described below. In Table 2, the number average molecular weight (Mn) of the resin production examples 11 to 15 is the Mn of the carboxyl group-containing resin (the resin before the reaction of converting the carboxyl group to -COO-Me²⁺ (⁻OOC-Y). Me is Cu or Zn.

### [i] Number average molecular weight (Mn)

The number average molecular weight (Mn) of each of the obtained resin and the monomer (a) is the number average molecular weight in terms of polystyrene measured by GPC. Measurement conditions were set as described below.
Apparatus: "HLC-8220GPC" manufactured by Tosoh
Column: TSKgel SuperHZM-M × 2 columns
Eluent: tetrahydrofuran
Measurement temperature: 35°C
Detector: RI

### [ii] Solid content concentration

The solid content concentration of the resin composition was calculated according to the following equation. 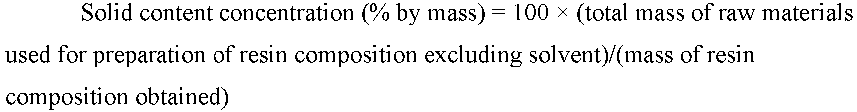 Solid content concentration (% by mass) = 100 × (total mass of raw materials used for preparation of resin composition excluding solvent)/(mass of resin composition obtained)

**[Table 1]**

| | | Resin production example | | | | | | | |
|---|---|---|---|---|---|---|---|---|---|
| | | 1 | 2 | 3 | 4 | 5 | 6 | 7 | 8 |
| Silicon atom-containing resin | | S1 | S2 | S3 | S4 | S5 | S6 | S7 | S8 |
| Monomer (a) | FM-0711 | | | | | | | | 21.0 |
| | FM-0721 | 40.0 | 40.0 | 40.0 | 40.0 | 40.0 | | 21.0 | |
| | FM-0725 | | | | | | | | |
| | KF-2012 | | | | | | 40.0 | | |
| | TM-0701T | | | | | | | | |
| | X-22-164C | | | | | | | | |
| Monomer (b) | TIPSA | | | | 14.2 | 14.2 | 15.0 | | |
| | TIPSMA | 14.2 | | 14.2 | | | | | |
| Monomer (c) | M-40G | | | | | | | 4.0 | 4.0 |
| | M-90G | | | | | | | | |
| | M-230G | | | | | | | | |
| | CB-1 | | | 5.0 | | | 5.0 | | |
| | HEMA | | | | | | | 1.0 | 1.0 |
| Monomer (d) | M1 | | | | | | | | |
| Monomer (e) | NPG | | | | | 1.0 | 1.0 | | |
| Monomer (f) | t-BMA | | | | | | 20.0 | 20.0 | 20.0 |
| | n-BMA | | | | | | 8.0 | 10.0 | 10.0 |
| | n-BA | | | | | | | | |
| | EHMA | 10.0 | 10.0 | 10.0 | 10.0 | 10.0 | | 5.0 | 5.0 |
| | MMA | 15.8 | 30.0 | 10.8 | 15.8 | 15.8 | 5.5 | 39.0 | 39.0 |
| | EA | 20.0 | 20.0 | 20.0 | 20.0 | 19.0 | 5.5 | | |
| Other monomers | AA | | | | | | | | |
| Total | | 100.0 | 100.0 | 100.0 | 100.0 | 100.0 | 100.0 | 100.0 | 100.0 |
| Solid content concentration (mass%) | | 46.4 | 50.5 | 48.4 | 57.0 | 57.0 | 50.4 | 50.0 | 50.1 |
| Number average molecular weight (Mn) | | 16,700 | 13,400 | 14,500 | 15,800 | 17,400 | 18,500 | 9,000 | 5,800 |

**[Table 2]**

| | | Resin production example | | | | | | |
|---|---|---|---|---|---|---|---|---|
| | | 9 | 10 | 11 | 12 | 13 | 14 | 15 |
| Silicon atom-containing resin | | S9 | S10 | S11 | S12 | S13 | S14 | S15 |
| Monomer (a) | FM-0711 | | 40.0 | | 40.0 | | | 10.0 |
| | FM-0721 | | | | | 35.0 | 35.0 | 10.0 |
| | FM-0725 | | | 30.0 | | | | |
| | KF-2012 | | | | | | | |
| | TM-0701T | 21.0 | | | | | | |
| | X-22-164C | | | | | | | 10.0 |
| Monomer (b) | TIPSA | | | | | 19.0 | 19.0 | 30.0 |
| | TIPSMA | | | | | | | |
| Monomer (c) | M-40G | 4.0 | | | | | | |
| | M-90G | | | | | | | 5.0 |
| | M-230G | | | | | 1.0 | 1.0 | |
| | CB-1 | | | | | | | |
| | HEMA | 1.0 | | | | | | |
| Monomer (d) | M1 | | 21.7 | | | | | |
| Monomer (e) | NPG | | | | | | | |
| Monomer (f) | t-BMA | 20.0 | | 6.0 | | | | |
| | n-BMA | 10.0 | | | | | | |
| | n-BA | | | | | 10.0 | 10.0 | |
| | EHMA | 5.0 | | 10.0 | 10.0 | | | 10.0 |
| | MMA | 39.0 | 20.4 | 30.0 | 15.8 | 26.0 | 26.0 | 8.6 |
| | EA | | 17.9 | 10.0 | 20.0 | | | 10.0 |
| Other monomers | AA | | | 14.0 | 14.2 | 9.0 | 9.0 | 6.4 |
| Total | | 100.0 | 100.0 | 100.0 | 100.0 | 100.0 | 100.0 | 100.0 |
| Solid content concentration (mass%) | | 50.2 | 45.1 | 50.2 | 46.4 | 50.5 | 50.7 | 51.8 |
| Number average molecular weight (Mn) | | 5,000 | 8,800 | 5,500 | 8,500 | 13,500 | 13,000 | 11,000 |

Abbreviations of the monomers shown in Table 1 and Table 2 as well as those of other components used in the resin production examples are as described below in detail.

### [Monomer (a)]

·FM-0711: manufactured by JNC, one-terminal methacryloyloxyalkyl-modified organopolysiloxane, monomer in which, in the formula (I'), m=0, b=3, and n=10 are set, R¹ to R⁴ and R³¹ are methyl groups, and R⁵ is an n-butyl group, molecular weight: 1,000
·FM-0721: manufactured by JNC, one-terminal methacryloyloxyalkyl-modified organopolysiloxane, monomer in which, in the formula (I'), m=0, b=3, and n=65 are set, R¹ to R⁴ and R³¹ are methyl groups, and R⁵ is an n-butyl group, molecular weight: 5,000
·FM-0725: manufactured by JNC, one-terminal methacryloyloxyalkyl-modified organopolysiloxane, monomer in which, in the formula (I'), m=0, b=3, and n=132 are set, R¹ to R⁴ and R³¹ are methyl groups, and R⁵ is an n-butyl group, molecular weight: 10,000
-KF-2012: manufactured by Shin-Etsu Chemical, one-terminal methacryloyloxyalkyl-modified organopolysiloxane, monomer in which, in the formula (I'), m=0 is set, and R¹ to R⁵ and R³¹ are methyl groups, molecular weight: 4,600
·TM-0701T: manufactured by JNC, one-terminal methacryloyloxyalkyl-modified organopolysiloxane, monomer in which, in the formula (II'), p=0 and d=3 are set, and R⁶ to R⁸ and R³² are methyl groups, molecular weight: 423
·X-22-164C: manufactured by Shin-Etsu Chemical, silicon-containing polymerizable monomer in which, in the general formula (III'), q=0, s=0, f=3, and g=3 are set, and R⁹ to R¹², R³³, and R³⁴ are methyl groups, molecular weight: 10,000

### [Monomer (b)]

·TIPSA: triisopropylsilyl acrylate, manufactured by Shin-Etsu Chemical
·TIPSMA: triisopropylsilyl methacrylate, manufactured by Shin-Etsu Chemical

### [Monomer (c)]

·M-40G: methoxy polyethylene glycol methacrylate (the number of repetitions of oxyethylene chain = 4), manufactured by Shin Nakamura Chemical
·M-90G: methoxy polyethylene glycol methacrylate (the number of repetitions of oxyethylene chain = 9), manufactured by Shin Nakamura Chemical
·M-230G: methoxy polyethylene glycol methacrylate (the number of repetitions of oxyethylene chain = 23), manufactured by Shin Nakamura Chemical
·CB-1: methacryloyloxyethyl phthalic acid, manufactured by Shin Nakamura Chemical
·HEMA: 2-hydroxyethyl methacrylate, manufactured by Mitsubishi Chemical

### [Monomer (e)]

·NPG: manufactured by Shin Nakamura Chemical, neopentyl glycol dimethacrylate

### [Monomer (f)]

·t-BMA: t-butyl methacrylate, manufactured by Mitsubishi Chemical
·n-BMA: n-butyl methacrylate, manufactured by Mitsubishi Gas Chemical
·n-BA: n-butyl acrylate, manufactured by Toagosei
·EHMA: 2-ethylhexyl methacrylate, manufactured by Mitsubishi Chemical
·MMA: methyl methacrylate, manufactured by Mitsubishi Gas Chemical
·EA: ethyl acrylate, manufactured by Toagosei

### [Other monomers]

·AA: acrylic acid, manufactured by Osaka Organic Chemical Industry
·MAA: methacrylic acid, manufactured by KURARAY

### [Other components]

·Zinc oxide: manufactured by Sakai Chemical Industry
·Zinc(II) acetate: manufactured by Nihon Kagaku Sangyo
·Copper(II) acetate: manufactured by Nihon Kagaku Sangyo
·NA-165: naphthenic acid (acid value, 165 mgKOH/g), manufactured by Yamato Yushi Kogyo
·NA-200: naphthenic acid (acid value, 200 mgKOH/g), manufactured by Yamato Yushi Kogyo
·HYPALE CH: hydrogenated rosin (acid value, 160 mgKOH/g), manufactured by Arakawa Chemical Industries

### Chain transfer agent;

·α-Methylstyrene dimer, manufactured by Mitsui Chemicals Radical polymerization initiator;
·Tert-butylperoxy-2-ethylhexanoate, manufactured by Kaka Akzo
·AIBN: azobisisobutyronitrile, manufactured by Otsuka Chemical
·AMBN: azobismethylbutyronitrile, manufactured by Otsuka Chemical

### Organic solvent;

·Xylene: manufactured by JFE Chemical
·n-Butanol: manufactured by JNC
·PGM: propylene glycol methyl ether: manufactured by Dow Chemical

### <Example 1>

### (1) Preparation of antifouling coating composition 1

83.20 parts by mass of the silicon-containing resin (S1) obtained in the above-mentioned manner, 6.74 parts by mass of a (meth)acrylic resin containing the constituent unit (D) as a thermoplastic resin 6, 0.30 parts by mass of Tipaque CR-50 as a pigment 1, 3.40 parts by mass of Bayferox 130 as a pigment 2, and 6.36 parts by mass of xylene as a solvent 1 were mixed and dispersed with the use of a disperser (2,000 rpm) to prepare an antifouling coating composition 1. The amounts in the formulation mean the actual amounts (parts by mass) including the volatile matter such as solvent. The value of VOC of the antifouling coating composition 1 is shown in Table 3.

### (2) Formation of coating film

To an SPCC steel plate (150 mm×70 mm×3.2 mm) that had an antirust coating film formed thereon by in-advance application of an antirust coating composition (epoxy-based anticorrosion coating: NIPPON E-MARINE A/C, manufactured by Nippon Paint Marine), the antifouling coating composition 1 was sprayed so as to achieve a dry coating thickness of 300 µm, and the resultant was left to stand in a room for two days and two nights for drying to obtain a test plate including an antifouling coating film.

### <Examples 2 to 32, Comparative Examples 1 to 6>

Antifouling coating compositions 2 to 32 and comparative antifouling coating compositions 1 to 6 were prepared in the same manner as in the preparation method for the antifouling coating composition 1 in Example 1 except that the type and the amount of the components were changed as specified in Table 3 to Table 8. Moreover, test plates including an antifouling coating film were obtained in the same manner as in Example 1 except that the antifouling coating compositions 2 to 32 and the comparative antifouling coating compositions 1 to 6 were used. The values of VOC of the antifouling coating compositions 2 to 32 and the comparative antifouling coating compositions 1 to 6 are shown in Table 3 to Table 8.

The details of the components shown in Table 3 to Table 8 are as described below.
·Thermoplastic resin 1: chlorinated paraffin ("Toyoparax A50" manufactured by Tosoh, solid content concentration: 100 mass%, weight average molecular weight: 750)
·Thermoplastic resin 2: rosin ("WW Rosin" manufactured by Arakawa Chemical Industries, solid content concentration: 100 mass%, weight average molecular weight: 350)
·Thermoplastic resin 3: polyvinyl ethyl ether, "Lutonal A25" manufactured by BASF, solid content concentration: 95 mass%, weight average molecular weight: 4,500
·Thermoplastic resin 4: vinyl chloride-isobutyl vinyl ether copolymer ("Laroflex MP25" manufactured by BASF JAPAN, solid content concentration: 100 mass%, weight average molecular weight: 28,000)
·Thermoplastic resin 5: acrylic resin, "DIANAL BR-106" manufactured by BASF, solid content concentration: 100 mass%, weight average molecular weight: 55,000
·Thermoplastic resin 6: (meth)acrylic resin containing the constituent unit (D) produced by a method described below, solid content concentration: 46.0 mass%, weight average molecular weight: 8,000
·Antifouling agent 1: cuprous oxide, manufactured by Furukawa Chemicals
·Antifouling agent 2: zinc pyrithione, "Zinc Omadine" manufactured by Arch Chemicals
·Antifouling agent 3: copper pyrithione, "Copper Omadine" manufactured by Arch Chemicals
·Antifouling agent 4: Sea-Nine 211, 4,5-dichloro-2-n-octyl-4-isothiazolin-3-one (4,5-dichloro-2-n-octyl-3(2H) isothiazolone), "Sea-Nine 211" manufactured by Rohm and Haas
·Antifouling agent 5: Irgarol, N'-tert-butyl-N-cyclopropyl-6-(methylthio)-1,3,5-triazine-2,4-diamine, "Irgarol 1051" manufactured by Ciba Specialty Chemicals
·Antifouling agent 6: ECONEA, 4-bromo-2-(4-chlorophenyl)-5-(trifluoromethyl)-1H-pyrrole-3-carbonitrile, "ECONEA" manufactured by Janssen PMP
·Antifouling agent 7: medetomidine, "Selektope" manufactured by I-TECH AB
·Pigment 1: titanium oxide, "Tipaque CR-50" manufactured by Ishihara Sangyo Kaisha
·Pigment 2: iron oxide, "Bayferox 130" manufactured by LANXESS

### <Thermoplastic Resin Production Example 1: Production of thermoplastic resin 6>

To a four-necked flask equipped with a thermometer, a condenser, a stirrer, a dropping funnel, a nitrogen inlet tube, and a temperature controller, 50.0 parts by mass of xylene was added as a solvent, and the resultant was maintained at 95°C. A mixture liquid obtained in advance by mixing 58.3 parts by mass of EA, 25.0 parts by mass of CHA (cyclohexyl acrylate, manufactured by Osaka Organic Chemical Industry), 16.7 parts by mass of AA, 10.0 parts by mass of xylene, and 1.2 parts by mass of tert-butylperoxy-2-ethylhexanoate as a radical polymerization initiator was added to the dropping funnel and added dropwise to the four-necked flask at a constant velocity over 3 hours, and after completion of the dropwise addition, incubated for 30 minutes. Then, a mixture liquid of 40.0 parts by mass of xylene and 0.3 parts by mass of tert-butylperoxy-2-ethylhexanoate was added dropwise to the four-necked flask at a constant velocity over 30 minutes, and after completion of the dropwise addition, incubated for 1.0 hour, to obtain a resin composition (solution) including a carboxyl group-containing resin.

Subsequently, to a similar reaction vessel, 100 parts by mass of the resin composition, 18.6 parts by mass of zinc(II) acetate, 33.2 parts by mass of naphthenic acid (NA-165), and 60.0 parts by mass of xylene were added, and the temperature was raised to a reflux temperature, and reaction was continued for 18 hours while removing the mixture liquid of acetic acid, water, and solvent in distillate and adding the same amount of xylene thereto. The end point of the reaction was determined by quantifying the amount of acetic acid in the distillate. After cooling the reaction liquid, n-butanol and xylene in equal mass were added so as to achieve a solid content concentration of the resin composition of 46.0 mass%, and thereby a resin composition (solution) including a thermoplastic resin 6 was obtained.

The weight average molecular weight (Mw) of each of the thermoplastic resins 1 to 6 is the weight average molecular weight in terms of polystyrene measured by GPC, and measurement conditions were set as described below.
Apparatus: "HLC-8220GPC" manufactured by Tosoh
Column: TSKgel SuperHZM-M × 2 columns
Eluent: tetrahydrofuran
Measurement temperature: 35°C
Detector: RI

### (Evaluation of antifouling coating composition)

### [a] Antifouling property of coating film (Dynamic antifouling property test)

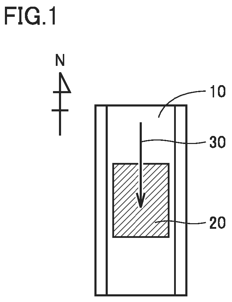

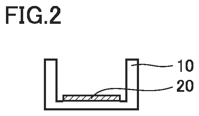

A metal waterway 10 illustrated in Fig. 1 and Fig. 2 was prepared. Waterway 10 had a groove having a width of 450 mm and a depth of 200 mm. As illustrated in the drawings, a test plate 20 obtained in each of Examples and Comparative Examples was placed on the bottom surface of the groove, with the antifouling coating film facing upward.

Waterway 10 with test plate 20 was placed in the sun inside the Marine Seafront Research Centre of Nippon Paint Marine located in Tamano City, Okayama Prefecture. At this time, waterway 10 was placed in a north-south direction so that test plate 20 was in the sun for the longest time possible (Fig. 1). Natural sea water drawn continuously from the Seto Naikai (the Inland Sea of Japan) was made to flow continuously in waterway 10. A flow direction 30 of the natural sea water was from north to south. The water level of the natural sea water flowing inside the waterway 10 was changed within the range of 40 mm and 200 mm in a 12-hour cycle for mimicking the natural tide. The flow speed of the natural sea water flowing inside the waterway 10 was adjusted depending on the water level, between about 30 cm/second (at the lowest water level) and about 10 cm/second (at the highest water level).

The test of continuously flowing natural sea water in waterway 10 was carried out for 12 months and the area of adhesion of marine organisms was determined and evaluated according to the criteria given below. The evaluation results after testing for 6 months and 12 months are shown in Table 3 to Table 8. Preferable evaluation results are greater than or equal to 3.
5: The area of adhesion of marine organisms is greater than or equal to 0% and less than 5%.
4: The area of adhesion of marine organisms is greater than or equal to 5% and less than 10%.
3: The area of adhesion of marine organisms is greater than or equal to 10% and less than 15%.
2: The area of adhesion of marine organisms is greater than or equal to 15% and less than 30%.
1: The area of adhesion of marine organisms is greater than or equal to 30%.

### [b] Crack resistance of coating film (Crack resistance test in environment with dry-wet cycles after stationary immersion)

To natural sea water drawn at a laboratory at the Marine Seafront Research Centre of Nippon Paint Marine located in Tamano City, Okayama Prefecture, sodium hydroxide was added to adjust the pH to 9 (typical sea water has about pH 8.2), to prepare adjusted sea water. The test plate obtained in each of Examples and Comparative Examples was immersed in the adjusted sea water at 30°C for 1 month. During the 1-month immersion, every several days, the adjusted sea water was replaced by fresh one.

After the 1-month immersion, test plate 20 was immersed in natural sea water at 40°C for 1 week and then dried indoors for 1 week; this procedure was defined as 1 cycle of alternate dry-wet test, and at most 20 cycles were carried out for examination of the state of the coating film on the test plate. When a crack was formed in the coating film during the test, the test was ended at the time when the crack was formed and the number of cycles at that time was used as an index of crack resistance. The numerical value in tables is the number of cycles at the time when a first crack was formed. When no crack was formed after 20 cycles, 20< was entered. Preferable evaluation results are greater than or equal to 15.

In Examples 1 to 32, excellent antifouling performance and excellent crack resistance were exhibited both at markedly high levels.

In Comparative Examples 1 to 4, the content of the thermoplastic resin did not fall within the predetermined range and a coating film exhibiting enough antifouling property and enough crack resistance was not obtained.

In Comparative Examples 5 to 6, the only thermoplastic resin used was one with a weight average molecular weight of less than 1,000, and a coating film exhibiting enough antifouling property and enough crack resistance was not obtained.

**[Table 3]**

| | | | Example | | | | | | | | | |
|---|---|---|---|---|---|---|---|---|---|---|---|---|
| | | | 1 | 2 | 3 | 4 | 5 | 6 | 7 | 8 | 9 | 10 |
| Antifouling coating composition | | No. | 1 | 2 | 3 | 4 | 5 | 6 | 7 | 8 | 9 | 10 |
| Silicon atom-containing resin | | No. | S1 | S2 | S3 | S2 | S3 | S4 | S5 | S6 | S7 | S8 |
| | | Amount in formulation (parts by mass) | 83.20 | 82.93 | 83.20 | 82.55 | 82.55 | 82.95 | 83.00 | 83.00 | 82.50 | 83.30 |
| Thermoplastic resin | | Thermoplastic resin 1 | | | | | | | | | | |
| | | Thermoplastic resin 2 | | | | | | | | | | |
| | | Thermoplastic resin 3 | | | | | | | | | | |
| | | Thermoplastic resin 4 | | | | | | | | | | |
| | | Thermoplastic resin 5 | | | | | | | | | | |
| | | Thermoplastic resin 6 | 6.74 | 7.30 | 7.00 | 8.15 | 8.15 | 7.28 | 7.20 | 7.20 | 7.20 | 6.52 |
| Antifouling agent | | Antifouling agent 1 | | | | | | | | | | |
| | | Antifouling agent 2 | | | | | | | | | | |
| | | Antifouling agent 3 | | | | | | | | | | |
| | | Antifouling agent 4 | | | | | | | | | | |
| | | Antifouling agent 5 | | | | | | | | | | |
| | | Antifouling agent 6 | | | | | | | | | | |
| | | Antifouling agent 7 | | | | | | | | | | |
| Solvent | | Solvent 1 | 6.36 | 6.07 | 6.10 | 5.60 | 5.60 | 6.07 | 6.10 | 6.10 | 6.60 | 6.48 |
| Pigment | | Pigment 1 | 0.30 | 0.30 | 0.30 | 0.30 | 0.30 | 0.30 | 0.30 | 0.30 | 0.30 | 0.30 |
| | | Pigment 2 | 3.40 | 3.40 | 3.40 | 3.40 | 3.40 | 3.40 | 3.40 | 3.40 | 3.40 | 3.40 |
| Total | | parts by mass | 100.00 | 100.00 | 100.00 | 100.00 | 100.00 | 100.00 | 100.00 | 100.00 | 100.00 | 100.00 |
| VOC | | (g/L) | 540 | 509 | 524 | 460 | 460 | 510 | 513 | 513 | 513 | 549 |
| Content of thermoplastic resin having weight average molecular weight greater than or equal to 1,000 with respect to 100 parts by mass of silicon atom-containing resin | | parts by mass | 8.0 | 8.0 | 8.0 | 8.0 | 8.0 | 8.0 | 8.0 | 8.0 | 8.0 | 8.0 |
| Evaluation results | Antifouling property | 6 months | 5 | 4 | 5 | 5 | 5 | 5 | 4 | 4 | 4 | 5 |
| | | 12 months | 4 | 4 | 5 | 4 | 5 | 5 | 3 | 3 | 3 | 4 |
| | Crack resistance | Number of cycles | 19 | 19 | 18 | 19 | 20< | 20 | 20< | 20< | 20< | 18 |

**[Table 4]**

| | | | Example | | | | | | |
|---|---|---|---|---|---|---|---|---|---|
| | | | 11 | 12 | 13 | 14 | 15 | 16 | 17 |
| Antifouling coating composition | | No. | 11 | 12 | 13 | 14 | 15 | 16 | 17 |
| Silicon atom-containing resin | | No. | S11 | S12 | S13 | S14 | S15 | S4 | S4 |
| | | Amount in formulation (parts by mass) | 82.97 | 83.20 | 82.93 | 82.93 | 82.85 | 83.44 | 81.20 |
| Thermoplastic resin | | Thermoplastic resin 1 | | | | | | | |
| | | Thermoplastic resin 2 | | | | | | | |
| | | Thermoplastic resin 3 | | | | | | | |
| | | Thermoplastic resin 4 | | | | | | | |
| | | Thermoplastic resin 5 | | | | | | | |
| | | Thermoplastic resin 6 | 7.24 | 6.74 | 7.30 | 7.30 | 7.50 | 6.22 | 11.09 |
| Antifouling agent | | Antifouling agent 1 | | | | | | | |
| | | Antifouling agent 2 | | | | | | | |
| | | Antifouling agent 3 | | | | | | | |
| | | Antifouling agent 4 | | | | | | | |
| | | Antifouling agent 5 | | | | | | | |
| | | Antifouling agent 6 | | | | | | | |
| | | Antifouling agent 7 | | | | | | | |
| Solvent | | Solvent 1 | 6.09 | 6.36 | 6.07 | 6.07 | 5.95 | 6.64 | 4.01 |
| Pigment | | Pigment 1 | 0.30 | 0.30 | 0.30 | 0.30 | 0.30 | 0.30 | 0.30 |
| | | Pigment 2 | 3.40 | 3.40 | 3.40 | 3.40 | 3.40 | 3.40 | 3.40 |
| Total | | parts by mass | 100.00 | 100.00 | 100.00 | 100.00 | 100.00 | 100.00 | 100.00 |
| VOC | | (g/L) | 511 | 540 | 509 | 508 | 499 | 463 | 455 |
| Content of thermoplastic resin having weight average molecular weight greater than or equal to 1,000 with respect to 100 parts by mass of silicon atom-containing resin | | parts by mass | 8.0 | 8.0 | 8.0 | 8.0 | 8.0 | 6.0 | 11.0 |
| Evaluation results | Antifouling property | 6 months | 5 | 5 | 5 | 5 | 5 | 5 | 5 |
| | | 12 months | 4 | 5 | 5 | 4 | 5 | 5 | 4 |
| | Crack resistance | Number of cycles | 18 | 16 | 17 | 18 | 18 | 18 | 20< |

**[Table 5]**

| | | | Example | | | | |
|---|---|---|---|---|---|---|---|
| | | | 18 | 19 | 20 | 21 | 22 |
| Antifouling coating composition | | No. | 18 | 19 | 20 | 21 | 22 |
| Silicon atom-containing resin | | No. | S11 | S11 | S11 | S11 | S11 |
| | | Amount in formulation (parts by mass) | 83.76 | 81.78 | 82.81 | 82.95 | 82.98 |
| Thermoplastic resin | | Thermoplastic resin 1 | | | | | |
| | | Thermoplastic resin 2 | | | | | |
| | | Thermoplastic resin 3 | | | 3.49 | | |
| | | Thermoplastic resin 4 | | | | | 3.32 |
| | | Thermoplastic resin 5 | | | | 3.35 | |
| | | Thermoplastic resin 6 | 5.52 | 9.83 | | | |
| Antifouling agent | | Antifouling agent 1 | | | | | |
| | | Antifouling agent 2 | | | | | |
| | | Antifouling agent 3 | | | | | |
| | | Antifouling agent 4 | | | | | |
| | | Antifouling agent 5 | | | | | |
| | | Antifouling agent 6 | | | | | |
| | | Antifouling agent 7 | | | | | |
| Solvent | | Solvent 1 | 7.02 | 4.69 | 10.00 | 10.00 | 10.00 |
| Pigment | | Pigment 1 | 0.30 | 0.30 | 0.30 | 0.30 | 0.30 |
| | | Pigment 2 | 3.40 | 3.40 | 3.40 | 3.40 | 3.40 |
| Total | | parts by mass | 100.00 | 100.00 | 100.00 | 100.00 | 100.00 |
| VOC | | (g/L) | 514 | 507 | 508 | 512 | 512 |
| Content of thermoplastic resin having weight average molecular weight greater than or equal to 1,000 with respect to 100 parts by mass of silicon atom-containing resin | | parts by mass | 6.0 | 11.0 | 8.0 | 8.0 | 8.0 |
| Evaluation results | Antifouling property | 6 months | 5 | 4 | 5 | 4 | 4 |
| | | 12 months | 4 | 3 | 5 | 4 | 4 |
| | Crack resistance | Number of cycles | 17 | 19 | 18 | 18 | 18 |

**[Table 6]**

| | | | Example | | | |
|---|---|---|---|---|---|---|
| | | | 23 | 24 | 25 | 26 |
| Antifouling coating composition | | No. | 23 | 24 | 25 | 26 |
| Silicon atom-containing resin | | No. | S11 | S11 | S4 | S4 |
| | | Amount in formulation (parts by mass) | 81.78 | 76.34 | 81.65 | 76.00 |
| Thermoplastic resin | | Thermoplastic resin 1 | 2.07 | 5.73 | 2.30 | 6.50 |
| | | Thermoplastic resin 2 | | | | |
| | | Thermoplastic resin 3 | | | 2.95 | 5.00 |
| | | Thermoplastic resin 4 | | | | |
| | | Thermoplastic resin 5 | | | | |
| | | Thermoplastic resin 6 | 5.35 | 9.20 | | |
| Antifouling agent | | Antifouling agent 1 | | | | |
| | | Antifouling agent 2 | | | | |
| | | Antifouling agent 3 | | | | |
| | | Antifouling agent 4 | | | | |
| | | Antifouling agent 5 | | | | |
| | | Antifouling agent 6 | | | | |
| | | Antifouling agent 7 | | | | |
| Solvent | | Solvent 1 | 7.10 | 5.03 | 9.40 | 8.80 |
| Pigment | | Pigment 1 | 0.30 | 0.30 | 0.30 | 0.30 |
| | | Pigment 2 | 3.40 | 3.40 | 3.40 | 3.40 |
| Total | | parts by mass | 100.00 | 100.00 | 100.00 | 100.00 |
| VOC | | (g/L) | 507 | 486 | 457 | 444 |
| Content of thermoplastic resin having weight average molecular weight greater than or equal to 1,000 with respect to 100 parts by mass of silicon atom-containing resin | | parts by mass | 6.0 | 11.0 | 6.0 | 11.0 |
| Evaluation results | Antifouling property | 6 months | 4 | 3 | 5 | 4 |
| | | 12 months | 3 | 3 | 4 | 3 |
| | Crack resistance | Number of cycles | 19 | 20< | 19 | 20< |

**[Table 7]**

| | | | Example | | | | | |
|---|---|---|---|---|---|---|---|---|
| | | | 27 | 28 | 29 | 30 | 31 | 32 |
| Antifouling coating composition | | No. | 27 | 28 | 29 | 30 | 31 | 32 |
| Silicon atom-containing resin | | No. | S11 | S11 | S11 | S11 | S11 | S11 |
| | | Amount in formulation (parts by mass) | 71.35 | 62.82 | 70.89 | 77.90 | 77.32 | 83.20 |
| Thermoplastic resin | | Thermoplastic resin 1 | | | | | | |
| | | Thermoplastic resin 2 | | | | | | |
| | | Thermoplastic resin 3 | | | | | | |
| | | Thermoplastic resin 4 | | | | | | |
| | | Thermoplastic resin 5 | | | | | | |
| | | Thermoplastic resin 6 | 8.56 | 7.53 | 8.50 | 9.35 | 9.28 | 10.00 |
| Antifouling agent | | Antifouling agent 1 | 3.00 | 20.00 | | | | |
| | | Antifouling agent 2 | | | 8.00 | | | |
| | | Antifouling agent 3 | 8.00 | | | | | |
| | | Antifouling agent 4 | | | | 4.10 | | |
| | | Antifouling agent 5 | | | 3.50 | | | |
| | | Antifouling agent 6 | | | | | 4.70 | |
| | | Antifouling agent 7 | | | | | | 0.10 |
| Solvent | | Solvent 1 | 5.39 | 5.95 | 5.41 | 4.95 | 4.98 | 3.00 |
| Pigment | | Pigment 1 | 0.30 | 0.30 | 0.30 | 0.30 | 0.30 | 0.30 |
| | | Pigment 2 | 3.40 | 3.40 | 3.40 | 3.40 | 3.40 | 3.40 |
| Total | | parts by mass | 100.00 | 100.00 | 100.00 | 100.00 | 99.98 | 100.00 |
| VOC | | (g/L) | 487 | 496 | 471 | 515 | 495 | 499 |
| Content of thermoplastic resin having weight average molecular weight greater than or equal to 1,000 with respect to 100 parts by mass of silicon atom-containing resin | | parts by mass | 11.0 | 11.0 | 11.0 | 11.0 | 11.0 | 11.0 |
| Evaluation results | Antifouling property | 6 months | 5 | 4 | 5 | 5 | 5 | 5 |
| | | 12 months | 5 | 3 | 4 | 5 | 5 | 5 |
| | Crack resistance | Number of cycles | 18 | 15 | 20 | 20< | 20< | 20< |

**[Table 8]**

| | | | Comparative Example | | | | | |
|---|---|---|---|---|---|---|---|---|
| | | | 1 | 2 | 3 | 4 | 5 | 6 |
| Comparative antifouling coating composition | | No. | 1 | 2 | 3 | 4 | 5 | 6 |
| Silicon atom-containing resin | | No. | S4 | S4 | S11 | S11 | S11 | S11 |
| | | Amount in formulation (parts by mass) | 83.90 | 81.00 | 84.19 | 81.59 | 82.97 | 82.97 |
| Thermoplastic resin | | Thermoplastic resin 1 | | | | | 3.33 | |
| | | Thermoplastic resin 2 | | | | | | 3.33 |
| | | Thermoplastic resin 3 | | | | | | |
| | | Thermoplastic resin 4 | | | | | | |
| | | Thermoplastic resin 5 | | | | | | |
| | | Thermoplastic resin 6 | 5.18 | 11.52 | 4.59 | 10.24 | | |
| Antifouling agent | | Antifouling agent 1 | | | | | | |
| | | Antifouling agent 2 | | | | | | |
| | | Antifouling agent 3 | | | | | | |
| | | Antifouling agent 4 | | | | | | |
| | | Antifouling agent 5 | | | | | | |
| | | Antifouling agent 6 | | | | | | |
| | | Antifouling agent 7 | | | | | | |
| Solvent | | Solvent 1 | 7.22 | 3.78 | 7.52 | 4.47 | 10.00 | 10.00 |
| Pigment | | Pigment 1 | 0.30 | 0.30 | 0.30 | 0.30 | 0.30 | 0.30 |
| | | Pigment 2 | 3.40 | 3.40 | 3.40 | 3.40 | 3.40 | 3.40 |
| Total | | parts by mass | 100.00 | 100.00 | 100.00 | 100.00 | 100.00 | 100.00 |
| VOC | | (g/L) | 465 | 454 | 516 | 506 | 512 | 510 |
| Content of thermoplastic resin having weight average molecular weight greater than or equal to 1,000 with respect to 100 parts by mass of silicon atom-containing resin | | parts by mass | 5.0 | 11.5 | 5.0 | 11.5 | 0.0 | 0.0 |
| Evaluation results | Antifouling property | 6 months | 5 | 2 | 5 | 2 | 2 | 3 |
| | | 12 months | 5 | 1 | 5 | 1 | 1 | 2 |
| | Crack resistance | Number of cycles | 10 | 20< | 8 | 20< | 17 | 10 |

### INDUSTRIAL APPLICABILITY

The antifouling coating composition according to the present invention makes it possible to form a coating film capable of exhibiting excellent antifouling performance (dynamic antifouling property, in particular) and excellent crack resistance both at markedly high levels. The antifouling coating composition according to the present invention can be suitably used as an antifouling coating composition to be applied to an underwater moving body such as a ship or to an in-water structure.

### REFERENCE SIGNS LIST

10 waterway , 20 test plate , 25 second adhesive agent layer, 30 flow direction of natural sea water.

## Claims

1. An antifouling coating composition comprising:
a silicon atom-containing resin; and
a thermoplastic resin other than the silicon atom-containing resin,
wherein
the silicon atom-containing resin includes a constituent unit (A) having at least one kind of silicon atom-containing group selected from the group consisting of a group represented by a formula (I) below, a group represented by a formula (II) below, a group represented by a formula (III) below, and a group represented by a formula (IV) below,
the thermoplastic resin includes a thermoplastic resin having a weight average molecular weight of greater than or equal to 1,000, and
a content of the thermoplastic resin having a weight average molecular weight of greater than or equal to 1,000 is greater than or equal to 6.0 parts by mass and less than or equal to 11.0 parts by mass with respect to 100 parts by mass of the silicon atom-containing resin: 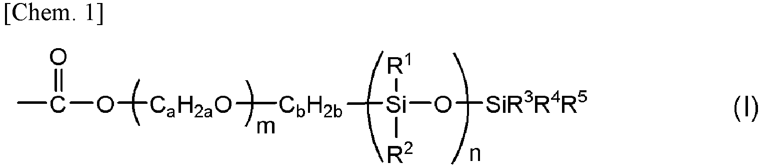 [in the formula (I), a and b each independently represent an integer of 2 to 5, m represents an integer of 0 to 50, and n represents an integer of 3 to 270; and R¹ to R⁵ each independently represent an alkyl group, an alkoxy group, a phenyl group, a substituted phenyl group, a phenoxy group, or a substituted phenoxy group]; 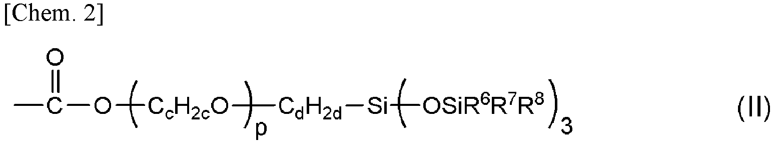 [in the formula (II), c and d each independently represent an integer of 2 to 5, and p represents an integer of 0 to 50; R⁶, R⁷ and R⁸ each independently represent an alkyl group, R^{a}, or R^{b};
R^{a} is 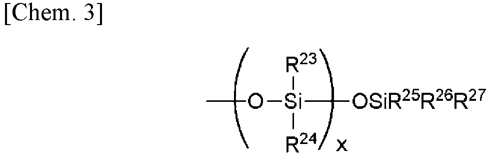 (in the formula, x represents an integer of 0 to 200, and R²³ to R²⁷ are the same or different and each represent an alkyl group); and
R^{b} is 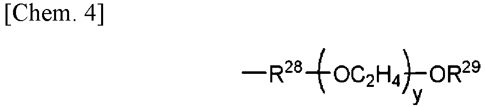 (in the formula, y represents an integer of 1 to 200, and R²⁸ and R²⁹ are the same or different and each represent an alkyl group)]; 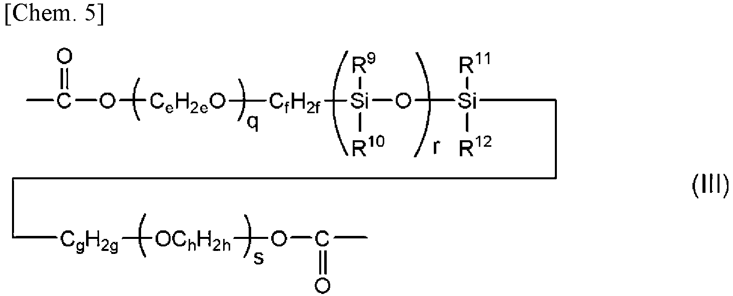 [in the formula (III), e, f, g, and h each independently represent an integer of 2 to 5, q and s each independently represent an integer of 0 to 50, and r represents an integer of 3 to 270; and R⁹ to R¹² each independently represent an alkyl group, an alkoxy group, a phenyl group, a substituted phenyl group, a phenoxy group, or a substituted phenoxy group]; 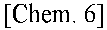 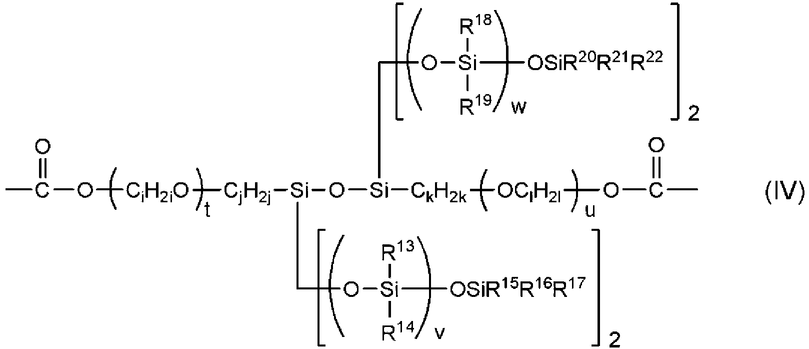 [in the formula (IV), i, j, k, and l each independently represent an integer of 2 to 5, t and u each independently represent an integer of 0 to 50, and v and w each independently represent an integer of 0 to 70; and R¹³ to R²² are the same or different and each represent an alkyl group].

2. The antifouling coating composition according to claim 1, wherein the silicon atom-containing resin further includes a constituent unit (B) having a triorganosilyloxycarbonyl group.

3. The antifouling coating composition according to claim 1 or 2, wherein the silicon atom-containing resin further includes a constituent unit (C) derived from a monomer (c) which is a monofunctional (meth)acrylic acid ester represented by a formula (c) below:
CH₂=C(R^{A})(COOR^{B}) (c)
[in the formula (c), R^{A} represents a hydrogen atom or a methyl group; and R^{B} represents a monovalent group including one or more kinds selected from the group consisting of a hydroxyl group, a carboxy group, and an oxyalkylene chain].

4. The antifouling coating composition according to claim 1 or 2, wherein the silicon atom-containing resin further includes a constituent unit (D) having at least one kind of metal atom-containing group selected from the group consisting of a group represented by a formula (V) below and a group represented by a formula (VI) below: 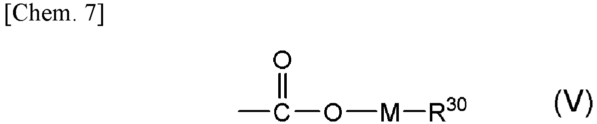 [in the formula (V), M represents a divalent metal atom, and R³⁰ represents an organic acid residue or an alcohol residue]; and 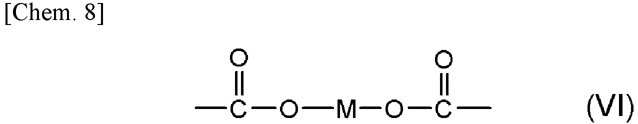 [in the formula (VI), M represents a divalent metal atom].

5. The antifouling coating composition according to claim 1 or 2, wherein a content of the constituent unit (A) is greater than or equal to 20 mass% in all constituent units contained in the silicon atom-containing resin.

6. The antifouling coating composition according to claim 1 or 2, not comprising an antifouling agent.

7. The antifouling coating composition according to claim 1 or 2, further comprising an antifouling agent.

8. The antifouling coating composition according to claim 7, wherein the antifouling agent is at least one kind selected from the group consisting of cuprous oxide, pyrithione metal salt, 4,5-dichloro-2-n-octyl-4-isothiazolin-3-one, 2-methylthio-4-t-butylamino-6-cyclopropylamino-s-triazine, 4-bromo-2-(4-chlorophenyl)-5-(trifluoromethyl)-1H-pyrrole-3-carbonitrile, and medetomidine.

9. An antifouling coating film formed from the antifouling coating composition according to claim 1.

10. A composite coating film comprising a primer coating film formed from an antirust coating composition, and an antifouling coating film formed from the antifouling coating composition according to claim 1 and overlaid on the primer coating film.

11. A ship comprising the antifouling coating film according to claim 9 or the composite coating film according to claim 10.

12. An in-water structure comprising the antifouling coating film according to claim 9 or the composite coating film according to claim 10.
